(19) Europäisches Patentamt
European Patent Office
Office européen des brevets

(11) **EP 4 534 504 A1**

(12) **EUROPEAN PATENT APPLICATION**
published in accordance with Art. 153(4) EPC

(43) Date of publication:
**09.04.2025 Bulletin 2025/15**

(21) Application number: 23816153.3

(22) Date of filing: **01.06.2023**

(51) International Patent Classification (IPC):
*C04B 35/488* (2006.01)    *A61C 5/70* (2017.01)
*A61C 13/083* (2006.01)    *C04B 35/645* (2006.01)

(52) Cooperative Patent Classification (CPC):
**A61C 5/70; A61C 13/083; C04B 35/488;
C04B 35/645**

(86) International application number:
**PCT/JP2023/020507**

(87) International publication number:
**WO 2023/234396 (07.12.2023 Gazette 2023/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **01.06.2022 JP 2022089666**

(71) Applicant: **Kuraray Noritake Dental Inc.
Kurashiki-shi, Okayama 710-0801 (JP)**

(72) Inventors:
• **ITO, Yoshihisa
  Miyoshi-shi, Aichi 470-0293 (JP)**
• **NIWA, Takahiro
  Miyoshi-shi, Aichi 470-0293 (JP)**
• **KATO, Shinichiro
  Miyoshi-shi, Aichi 470-0293 (JP)**

(74) Representative: **D Young & Co LLP
3 Noble Street
London EC2V 7BQ (GB)**

(54) **BLACK ZIRCONIA COMPOSITE SINTERED BODY AND METHOD FOR MANUFACTURING SAME**

(57)    The present invention provides a zirconia composite sintered body that exhibits excellent machinability in its sintered state while displaying a black color. The present invention relates to a black zirconia composite sintered body comprising $ZrO_2$, $HfO_2$, a stabilizer capable of preventing a phase transformation of zirconia, and $Nb_2O_5$ and/or $Ta_2O_5$, wherein the total content of $ZrO_2$ and $HfO_2$ is 78 to 97.5 mol%, the content of the stabilizer is 1 to 12 mol%, and the total content of $Nb_2O_5$ and $Ta_2O_5$ is 1 to 9 mol% in total 100 mol% of $ZrO_2$, $HfO_2$, the stabilizer, $Nb_2O_5$, and $Ta_2O_5$, and the black zirconia composite sintered body further comprises elements or ions derived from a capping agent.

**EP 4 534 504 A1**

# EP 4 534 504 A1

**Description**

TECHNICAL FIELD

The present invention relates to black zirconia composite sintered bodies and methods of production thereof. More specifically, the present invention relates to a black zirconia composite sintered body that exhibits excellent processability in the sintered state while having superior strength, and to a method for producing such a black zirconia composite sintered body.

BACKGROUND ART

Advancements in communication technologies such as 5G have caused a shift towards using higher frequency bands for communication signals. Although metal is commonly used for the back covers of 5G smartphones, it is unsuited for devices adapted to transmit and receive such high frequency signals. For this reason, plastic, glass, and ceramics are used instead.

Among such materials, black ceramics are used in certain applications because black offers high design qualities such as luxurious look.

There has also been a desire to use zirconia as a ceramic material with high design appeal. However, zirconia is not easily processable in its sintered form, and using its sintered body as part of the materials in smartphones results in increased processing costs due to the difficult processability of the zirconia sintered body.

Given the necessity of black for smartphone casings, black-colored free-cutting ceramics have been developed that contain zirconia without making it the primary component (for example, Patent Literature 1).

Black zirconia sintered bodies have also been developed for their superior design qualities, though black zirconia sintered bodies are notably interior in terms of processability (for example, Patent Literatures 2 and 3).

Concerning zirconia sintered bodies, processable zirconia sintered bodies with enhanced processability are also available, though these are not black and focused on the dental field (for example, Patent Literature 4). For example, Patent Literature 4 discloses a processable zirconia as a sintered body formed by incorporating a tetragonal zirconia composite powder and a $TiO_2$ nanopowder, where the tetragonal zirconia composite powder contains 79.8 to 92 mol% $ZrO_2$ and 4.5 to 10.2 mol% $Y_2O_3$ along with 3.5 to 7.5 mol% $Nb_2O_5$ or 5.5 to 10.0 mol% $Ta_2O_5$, and the $TiO_2$ nanopowder is incorporated in a mass ratio of more than 0 mass% and 2.5 mass% or less relative to the zirconia composite powder. A method of production of this zirconia sintered body is also disclosed.

CITATION LIST

Patent Literature

Patent Literature 1: JP 2001-354480 A
Patent Literature 2: JP 2006-342036 A
Patent Literature 3: JP 2017-77976 A
Patent Literature 4: JP 2015-127294 A

SUMMARY OF INVENTION

Technical Problem

Patent Literature 1 uses zirconia as a black pigment obtained through reduction firing. However, the proportion of zirconia is low because free-machinability decreases with higher zirconia content.

Patent Literature 2 proposes a zirconia sintered body with a deep black hue. Patent Literature 3 proposes a black zirconia sintered body that addresses the problem of color changes that occur during the sintering process of zirconia sintered bodies.

However, neither Patent Literature 2 nor Patent Literature 3 is able to resolve the problem of inadequate processability.

The zirconia sintered body disclosed in Patent Literature 4 is machinable even in its sintered state. However, its processability can hardly be considered superior as it involves prolonged processing times in cutting the workpiece, requiring further improvement in processability. Furthermore, this zirconia sintered body is not black and is highly translucent, with a color tone that completely differs from black.

While the zirconia sintered body disclosed in Patent Literature 4 is machinable, a continuous process with a single processing tool can produce only a small number of units. Additionally, the tool wears out quickly, necessitating frequent replacements, which increases tool change times and reduces both productivity and cost-effectiveness.

As discussed above, the level of processability for zirconia sintered bodies is still limited even in Patent Literature 4, and there remain problems inherent to the sintered state of zirconia, making processing of zirconia sintered bodies highly difficult. That is, it is still difficult to provide a zirconia sintered body that excels in processability in the sintered state, and no zirconia sintered body is available that exhibits excellent processability in its sintered state while displaying a black color.

It is an object of the present invention to provide a zirconia composite sintered body that exhibits excellent machinability in its sintered state while displaying a black color.

Solution to Problem

The present inventors conducted intensive studies to find a solution to the problems discussed above, and found that the foregoing issues can be solved by additionally incorporating capping elements or ions in a black zirconia composite sintered body that comprises $ZrO_2$, $HfO_2$, a stabilizer capable of preventing a phase transformation of zirconia, and $Nb_2O_5$ and/or $Ta_2O_5$ in predetermined proportions. This led to the completion of the present invention after further examinations.

Specifically, the present invention includes the following.

[1] A black zirconia composite sintered body comprising $ZrO_2$, $HfO_2$, a stabilizer capable of preventing a phase transformation of zirconia, and $Nb_2O_5$ and/or $Ta_2O_5$,

wherein the total content of $ZrO_2$ and $HfO_2$ is 78 to 97.5 mol%, the content of the stabilizer is 1 to 12 mol%, and the total content of $Nb_2O_5$ and $Ta_2O_5$ is 1 to 9 mol% in total 100 mol% of $ZrO_2$, $HfO_2$, the stabilizer, $Nb_2O_5$, and $Ta_2O_5$, and

the black zirconia composite sintered body further comprises elements or ions derived from a capping agent.

[2] The black zirconia composite sintered body according to [1], wherein the content of the elements or ions derived from the capping agent is more than 0 mol% and 5 mol% or less relative to total 100 mol% of $ZrO_2$, $HfO_2$, the stabilizer, $Nb_2O_5$, and $Ta_2O_5$.

[3] The black zirconia composite sintered body according to [1] or [2], which has a chroma C* of 10 or less as calculated from a* and b* measured against a white background according to L*a*b* color system using a sample measuring 15 mm in diameter and 1.2 mm in thickness.

[4] The black zirconia composite sintered body according to [1] or [2], which has L* ≤ 60, |a*| ≤ 3, and |b*| ≤ 3 as measured against a white background according to L*a*b* color system using a sample measuring 15 mm in diameter and 1.2 mm in thickness.

[5] The black zirconia composite sintered body according to any one of [1] to [4], wherein the elements or ions derived from the capping agent comprise at least one element or ion thereof selected from the group consisting of Cu, Ag, Li, Na, K, Rb, Cs, Fr, At, I, Br, Cl, and F.

[6] The black zirconia composite sintered body according to any one of [1] to [5], which has a ratio A/B of 0.9 or more and 3 or less, where A represents the content of the stabilizer in mol%, and B represents the total content of $Nb_2O_5$ and $Ta_2O_5$ in mol%.

[7] The black zirconia composite sintered body according to any one of [1] to [6], wherein the stabilizer comprises $Y_2O_3$ and/or $CeO_2$.

[8] The black zirconia composite sintered body according to any one of [1] to [7], which further comprises a zirconia enhancer, and the content of the zirconia enhancer is more than 0 mass% and 5.0 mass% or less relative to total 100 mass% of $ZrO_2$, $HfO_2$, the stabilizer, $Nb_2O_5$, and $Ta_2O_5$.

[9] The black zirconia composite sintered body according to [8], wherein the zirconia enhancer comprises $TiO_2$ and/or $Al_2O_3$.

[10] The black zirconia composite sintered body according to [9], wherein the zirconia enhancer comprises $TiO_2$, and the content of $TiO_2$ is 0.6 to 3.7 mass%.

[11] A method for producing a black zirconia composite sintered body of any one of [1] to [10], comprising the steps of:

fabricating a molded body with a raw material composition that comprises $ZrO_2$, $HfO_2$, a stabilizer capable of preventing a phase transformation of zirconia, and $Nb_2O_5$ and/or $Ta_2O_5$, wherein the total content of $ZrO_2$ and $HfO_2$ is 78 to 97.5 mol%, the content of the stabilizer is 1 to 12 mol%, and the total content of $Nb_2O_5$ and $Ta_2O_5$ is 1 to 9 mol% in total 100 mol% of $ZrO_2$, $HfO_2$, the stabilizer, $Nb_2O_5$, and $Ta_2O_5$, and that further comprises a capping agent; and
sintering the molded body.

[12] The method for producing a black zirconia composite sintered body according to [11], which comprises a reduction firing step in the step of sintering the molded body.

[13] The method for producing a black zirconia composite sintered body according to [11] or [12],

wherein the capping agent contained in the raw material composition is a compound with the potential to become a monovalent ion, and

the method further comprises the step of wet mixing raw materials of the raw material composition in a solvent containing water to obtain the raw material composition.

[14] The method for producing a black zirconia composite sintered body according to any one of [11] to [13], wherein the stabilizer in the raw material composition comprises a stabilizer not dissolved in $ZrO_2$ and $HfO_2$ as a solid solution.

Advantageous Effects of Invention

According to the present invention, a zirconia composite sintered body can be provided that exhibits excellent machinability in its sintered state while displaying a black color.

The present invention can also provide a black zirconia composite sintered body that can be machined in the sintered state with short machining times while reducing wear on processing tools, increasing the number of units that can be cut out in continuous processing with a single processing tool (hereinafter, also referred to simply as "continuous processing"), leading to increased productivity and cost-effectiveness.

The present invention can also provide a black zirconia composite sintered body that has excellent design qualities with superior strength.

Additionally, a method for producing a black zirconia composite sintered body according to the present invention does not require firing under applied pressure.

BRIEF DESCRIPTION OF DRAWINGS

[FIG. 1] FIG. 1 is a schematic view representing a presumed structure in relation to a black zirconia composite sintered body of the present invention.

[FIG. 2] FIG. 2 is a schematic view depicting a presumed mechanism of action in relation to elements or ions derived from a capping agent according to the present invention.

DESCRIPTION OF EMBODIMENTS

A black zirconia composite sintered body of the present invention comprises $ZrO_2$, $HfO_2$, a stabilizer capable of preventing a phase transformation of zirconia (hereinafter, also referred to simply as "stabilizer"), and $Nb_2O_5$ and/or $Ta_2O_5$,

wherein the total content of $ZrO_2$ and $HfO_2$ is 78 to 97.5 mol%, the content of the stabilizer is 1 to 12 mol%, and the total content of $Nb_2O_5$ and $Ta_2O_5$ is 1 to 9 mol% in total 100 mol% of $ZrO_2$, $HfO_2$, the stabilizer, $Nb_2O_5$, and $Ta_2O_5$, and the black zirconia composite sintered body further comprises elements or ions derived from a capping agent.

A black zirconia composite sintered body of the present invention refers to a state where $ZrO_2$ particles (powder) are fully sintered (sintered state). In this specification, the upper limits and lower limits of numeric ranges (for example, ranges of contents of components, ranges of values calculated from components, and ranges of physical properties) can be appropriately combined.

In this specification, machining encompasses both cutting and grinding.

Machining may be a wet or dry process, without specific restrictions.

In this specification, elements or ions derived from a capping agent (hereinafter, also referred to as "capping elements or ions") refer to elements or ions that weaken the strength of the crystal interface, or grain boundary as it is also called hereinbelow, by capping the terminals of the bonding sites of zirconia-based composite oxides within a black zirconia composite sintered body constituted of zirconia-based composite oxides (hereinafter, the strength of grain boundaries is also referred to as "grain boundary strength").

The capping agent can partially cap the crystal grain boundaries.

The term "capping" refers to elements or ions (capping elements or ions) of interest existing at the crystal grain boundaries by binding to the bonding sites of zirconia-based composite oxides instead of the metal elements.

It is believed that the presence of capping elements or ions in the form of +1 cations or -1 anions causes electrostatic repulsion between these capping cations or anions, thereby reducing the grain boundary strength.

In this specification, the content of each component in the black zirconia composite sintered body can be calculated from the quantities of raw materials used.

The content of the components $ZrO_2$, $HfO_2$, stabilizer, $Nb_2O_5$, and $Ta_2O_5$ in the black zirconia composite sintered body can be measured using a technique, for example, such as inductively coupled plasma (ICP) emission spectral analysis or X-ray fluorescence analysis.

The content (mol%) of elements or ions derived from the capping agent refers to the proportion external to total 100 mol% of $ZrO_2$, $HfO_2$, the stabilizer, $Nb_2O_5$, and $Ta_2O_5$. Accordingly, the content of capping elements or ions in the black zirconia composite sintered body can be calculated by converting the quantity (mass) of the raw material added into mol%.

The content of zirconia enhancer (mass%) is the proportion external to total 100 mass% of $ZrO_2$, $HfO_2$, the stabilizer, $Nb_2O_5$, and $Ta_2O_5$. Accordingly, the content of zirconia enhancer in the black zirconia composite sintered body can be calculated from the quantity (mass) of the raw material added.

It remains unclear why a black zirconia composite sintered body of the present invention allows for machining in the sintered state with its adequate strength and high machinability. However, the following speculation has been made.

When present at the crystal grain boundaries in the black zirconia composite sintered body comprising $ZrO_2$, $HfO_2$, a stabilizer capable of preventing a phase transformation of zirconia, and $Nb_2O_5$ and/or $Ta_2O_5$, the capping elements or ions appear to reduce the grain boundary strength in the form of +1 cations or -1 anions, facilitating particles to separate, thereby improving grindability and machinability.

Presumably, a black zirconia composite sintered body of the present invention has a structure that comprises: zirconia particles 1 containing $ZrO_2$, $HfO_2$, a stabilizer capable of preventing a phase transformation of zirconia, and $Nb_2O_5$ and/or $Ta_2O_5$; a releasing component 2 containing capping elements or ions; and, optionally, an adhesive component 3 containing $ZrO_2$, $HfO_2$, $Nb_2O_5$ and/or $Ta_2O_5$, and metal elements (for example, Ti) derived from a zirconia enhancer.

$ZrO_2$, $HfO_2$, and $Nb_2O_5$ and/or $Ta_2O_5$ are present in part within both the zirconia particles 1 and the adhesive component 3.

Furthermore, a zirconia composite sintered body of the present invention includes grain boundaries 4 where the releasing component 2 is absent. The moderate presence of capping elements or ions within the releasing component 2 at the grain boundaries is believed to appropriately lower the grain boundary strength while keeping the strength reduction to a minimum.

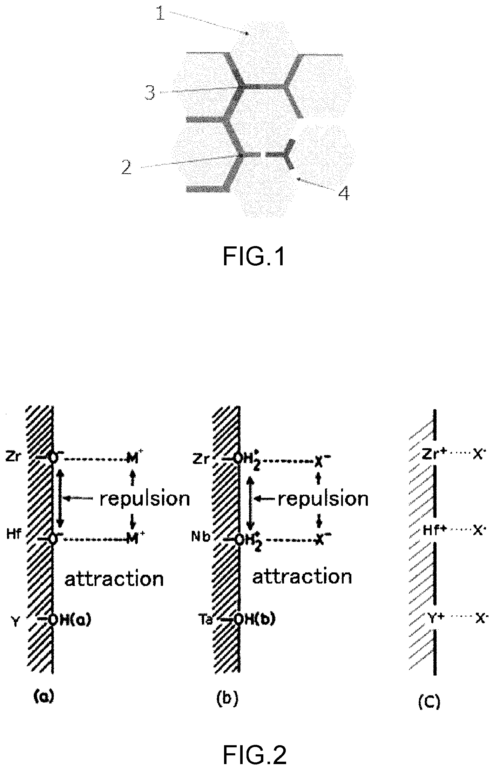

FIG. 1 is a schematic view representing the presumed structure of the zirconia composite sintered body in an embodiment where the zirconia composite sintered body comprises a zirconia enhancer. Even though the adhesive component 3 is present in the zirconia composite sintered body containing a zirconia enhancer, it is possible to increase strength without inhibiting the effect of releasing component 2 to reduce grain boundary strength.

In the form of +1 cations or -1 anions, the capping elements or ions bind to the bonding sites of zirconia-based composite oxides at the grain boundaries of the black zirconia composite sintered body. This binding leads to electrostatic repulsion between the cations or anions, reducing the grain boundary strength while maintaining the strength properties of the particles constituting the black zirconia composite sintered body, resulting in improved machinability.

As a possible example of such bonding, as shown in FIG. 2(a), a +1 cation can form a bond with the other bonding site of an oxygen atom that is already bonded to the metal element (for example, Zr, Hf, Y, Nb, or Ta) contained in the zirconia-based composite oxide, instead of these metal elements forming such bonds. In FIG. 2(a), $M^+$ represents a +1 cation.

Another possible example is where a -1 anion binds to the $OH^{2+}$ attached to the metal element (for example, Zr, Hf, Y, Nb, or Ta) contained in the zirconia-based composite oxide, as depicted in FIG. 2(b).

In yet another possible example, a -1 anion can bind to the cation derived from the metal element (for example, Zr, Hf, Y, Nb, or Ta) contained within the zirconia-based composite oxide and attached to other metal elements, as shown in FIG. 2(c). In FIG. 2(b) and (c), $X^-$ represents a -1 anion.

FIG. 2, (a) through (c), schematically represents the interactions between charged sites and adsorption sites at the grain boundaries.

In the black zirconia composite sintered body, $Nb_2O_5$ and/or $Ta_2O_5$ serve to coarsen the microstructure and reduce hardness, and, by acting integrally with the capping elements or ions, improve machinability. Through this integrated action, $Nb_2O_5$ and/or $Ta_2O_5$ and the capping elements or ions can provide excellent free-machinability while ensuring adequate strength, reducing machining time and increasing the number of units that can be produced in continuous processing with a single processing tool while reducing wear on processing tools. It is believed that this can resolve the specific challenges associated with the continuous processing of zirconia sintered bodies.

In a black zirconia composite sintered body of the present invention, the capping elements or ions serve as an agent that imparts free-machinability in the manner described above, without greatly compromising strength.

The content of the capping elements or ions contained in a black zirconia composite sintered body of the present invention is preferably more than 0 mol% and 5 mol% or less. In view of providing even superior machinability and increasing the number of units that can be produced in continuous processing with a single processing tool, the content of capping elements or ions is more preferably 0.05 mol% or more and 3 mol% or less, even more preferably 0.06 mol% or more and 2.5 mol% or less, particularly preferably 0.07 mol% or more and 1.0 mol% or less, most preferably 0.08 mol% or more and 0.34 mol% or less.

When the capping elements or ions contained in a black zirconia composite sintered body of the present invention are Group 17 elements or ions, the content of capping elements or ions is more preferably 0.2 mol% or more and 5 mol% or less, even more preferably 0.3 mol% or more and 4 mol% or less, particularly preferably 0.4 mol% or more and 3.5 mol% or less, most preferably 0.5 mol% or more and 3.0 mol% or less in view of providing even superior machinability and increasing the number of units that can be produced in continuous processing with a single processing tool.

In view of ensuring appropriate interactions between charged sites and adsorption sites at the grain boundaries, it is important that the capping elements or ions exist at the grain boundaries in the form of +1 cations or -1 anions, as noted above.

For capping elements or ions, it is preferable to use elements or ions thereof belonging to periods 2 to 7 of the periodic table and having a first ionization energy lower than the elements in Group 18 of the same periods, or elements or ions thereof with high electron affinity. Also preferred are nitrate ions, hypochlorite ions, chlorite ions, chlorate ions, perchlorate ions, bromate ions, permanganate ions, metaborate ions, and cyanide ions.

A certain preferred embodiment is, for example, a black zirconia composite sintered body in which the elements or ions thereof derived from the capping agent are elements or ions thereof belonging to periods 2 to 7 of the periodic table and having a first ionization energy lower than the elements in Group 18 of the same periods, and/or elements or ions thereof with high electron affinity.

In view of facilitating the formation of +1 cations and providing even superior machinability, the elements belonging to periods 2 to 7 of the periodic table and having a first ionization energy lower than the elements in Group 18 of the same periods are preferably Cu, Ag, Li, Na, K, Rb, Cs, and Fr, for example.

In view of facilitating the formation of -1 anions and providing even superior machinability, the elements with high electron affinity are preferably Group 17 elements. Preferred as Group 17 elements are At, I, Br, Cl, and F.

The first ionization energy refers to the energy needed to remove one electron from a neutral atom to ionize it. The first ionization energy can be referenced from Shriver & Atkins Inorganic Chemistry (Volume 1), 4th Edition, Part 1: Foundations, 1. Atomic Structure. The first ionization energy, given in eV in Appendix 2 of this book, can be converted into KJ/mol using the conversion rate of 1eV = 96.485 KJ/mol. The first ionization energy can also be determined using photoelectron yield spectroscopy (PYS).

Electron affinity (EA) is the amount of energy released when an electron is incorporated in a neutral atom. Electron affinity can be determined by the difference between the ionization potential and the energy gap. The ionization potential is defined as the energy difference between the highest occupied molecular orbital of a compound and the vacuum level, and it is measured using ultraviolet photoelectron spectroscopy.

For the first ionization energy and electron affinity, data available in the NIST Chemistry WebBook (https://webbook.nist.gov/chemistry/) may be utilized (by selecting either Ionization Energy or Electron Affinity from Ion energetics properties).

The methods described above can be appropriately employed for the measurement of first ionization energy and electron affinity because the measurement simply involves comparing the likelihood to form +1 cations or -1 anions among different elements.

Specific examples of the capping elements include Cu, Ag, Li, Na, K, Rb, Cs, Fr, At, I, Br, Cl, and F. In view of the ability to more greatly improve machinability, preferred are Cu, Ag, Li, Na, K, Rb, Cs, Fr, I, Br, Cl, and F.

A certain preferred embodiment is, for example, a black zirconia composite sintered body in which the elements derived from the capping agent comprise at least one element selected from the group consisting of Cu, Ag, Li, Na, K, Rb, Cs, Fr, At, I, Br, Cl, and F, and ions of these elements are at least one +1 cation or -1 anion selected from the group consisting of Cu, Ag, Li, Na, K, Rb, Cs, Fr, I, Br, Cl, and F.

Another preferred embodiment is, for example, a black zirconia composite sintered body in which the elements or ions derived from the capping agent comprise at least one element or ion thereof selected from the group consisting of Ag, Li, Na, K, Rb, Cs, Fr, At, I, Br, Cl, and F.

The capping elements or ions may be used alone, or two or more thereof may be used in combination.

In a black zirconia composite sintered body of the present invention, the total content of $ZrO_2$ and $HfO_2$ is 78 to 97.5 mol% in total 100 mol% of $ZrO_2$, $HfO_2$, the stabilizer, $Nb_2O_5$, and $Ta_2O_5$. In view of even superior strength, the total content of $ZrO_2$ and $HfO_2$ is preferably 79 mol% or more and 96 mol% or less, more preferably 80 mol% or more and 94 mol% or less, even more preferably 81 mol% or more and 93 mol% or less.

In a black zirconia composite sintered body of the present invention, $Nb_2O_5$ and $Ta_2O_5$ serve to coarsen the microstructure and reduce hardness, and can provide excellent free-machinability by acting integrally with the capping elements or ions, as described above. This leads to excellent machinability in the sintered state, despite a high $ZrO_2$ and $HfO_2$ content of 78 to 97.5 mol% in total.

Examples of the stabilizer capable of preventing a phase transformation of zirconia include oxides such as calcium oxide (CaO), magnesium oxide (MgO), yttrium oxide ($Y_2O_3$), cerium oxide ($CeO_2$), scandium oxide ($Sc_2O_3$), lanthanum oxide ($La_2O_3$), erbium oxide ($Er_2O_3$), praseodymium oxide ($Pr_2O_3$, $Pr_6O_{11}$), samarium oxide ($Sm_2O_3$), europium oxide ($Eu_2O_3$), thulium oxide ($Tm_2O_3$), gallium oxide ($Ga_2O_3$), indium oxide ($In_2O_3$), and ytterbium oxide ($Yb_2O_3$). In view of enhancing the effectiveness of the present invention, particularly aesthetics, preferred are $Y_2O_3$ (yttria) and/or $CeO_2$. The stabilizer may be used alone, or two or more thereof may be used in combination.

As described above, the capping elements or ions act integrally with $Nb_2O_5$ and/or $Ta_2O_5$, and these do not compromise the effectiveness of the stabilizer. Accordingly, the present invention can exhibit its effects without particularly restricting the choice of stabilizer.

In a black zirconia composite sintered body of the present invention, the content of the stabilizer capable of preventing a phase transformation of zirconia is 1 to 12 mol% in total 100 mol% of $ZrO_2$, $HfO_2$, the stabilizer, $Nb_2O_5$, and $Ta_2O_5$. In view of ease of achieving sufficient machinability, the content of the stabilizer is preferably 2 mol% or more and 10 mol% or less. In view of even superior strength, the content of the stabilizer is more preferably 3 mol% or more and 8 mol% or less, even more preferably 3.5 mol% or more and 7.5 mol% or less.

A certain preferred embodiment is, for example, a black zirconia composite sintered body in which the stabilizer capable of preventing a phase transformation of zirconia comprises $Y_2O_3$ and/or $CeO_2$, and the total content of $Y_2O_3$ and $CeO_2$ is 2 mol% or more and 10 mol% or less.

Another certain preferred embodiment is, for example, a black zirconia composite sintered body in which the stabilizer capable of preventing a phase transformation of zirconia comprises $Y_2O_3$, and the $Y_2O_3$ content is 2 mol% or more and 10 mol% or less.

In any of the embodiments above, the content of $Y_2O_3$ and $CeO_2$ may be appropriately varied within the ranges specified in this specification. For example, in view of even superior strength, the total content of $Y_2O_3$ and $CeO_2$ may be 2.5 mol% or more and 10 mol% or less, or 3 mol% or more and 9 mol% or less.

In a black zirconia composite sintered body of the present invention, the total content of $Nb_2O_5$ and $Ta_2O_5$ is 1 to 9 mol%, preferably 1.5 mol% or more and 8.5 mol% or less in total 100 mol% of $ZrO_2$, $HfO_2$, the stabilizer, $Nb_2O_5$, and $Ta_2O_5$. In view of integrated action with the capping elements or ions and even superior machinability, the total content of $Nb_2O_5$ and $Ta_2O_5$ is more preferably 2.5 mol% or more and 8 mol% or less, even more preferably 3 mol% or more and 7 mol% or less. When the total content of $Nb_2O_5$ and $Ta_2O_5$ is less than 1 mol%, it is difficult to provide sufficient machinability. When the total content of $Nb_2O_5$ and $Ta_2O_5$ is more than 9 mol%, the resulting black zirconia composite sintered body may experience defects such as chipping, and fail to provide sufficient properties.

In addition to serving to coarsen the microstructure and reduce hardness, and acting integrally with the capping elements or ions to provide excellent free-machinability as noted above, $Nb_2O_5$ and $Ta_2O_5$ also interact with other components (for example, $TiO_2$, $Al_2O_3$) incorporated in the black zirconia composite sintered body. This interaction, combined with the application of HIP, helps maximize the sintering density, facilitating the production of black zirconia composite sintered bodies with even greater design qualities.

The content of the components $ZrO_2$, $HfO_2$, stabilizer, $Nb_2O_5$, and $Ta_2O_5$ represents the proportion of each component in total 100 mol% of $ZrO_2$, $HfO_2$, stabilizer, $Nb_2O_5$, and $Ta_2O_5$, and the sum of $ZrO_2$, $HfO_2$, stabilizer, $Nb_2O_5$, and $Ta_2O_5$ does not exceed 100 mol%. For example, when the raw material composition contains $Nb_2O_5$ but does not contain $Ta_2O_5$, the content of the components $ZrO_2$, $HfO_2$, stabilizer, and $Nb_2O_5$ refers to the proportion of each component relative to total 100 mol% of $ZrO_2$, $HfO_2$, stabilizer, and $Nb_2O_5$.

In view of machinability, the ratio A/B is preferably 0.9 to 3, more preferably 0.95 to 2, where A is the content of stabilizer in mol%, and B is the total content of $Nb_2O_5$ and $Ta_2O_5$ in mol%. Even more preferably, the ratio A/B is 1 to 1.6 in view of enhancing the effectiveness of the integrated action between the capping elements or ions and $Nb_2O_5$ and/or $Ta_2O_5$, improving free-machinability, and increasing the number of units that can be produced in continuous processing with a single processing tool while reducing wear on processing tools.

A certain preferred embodiment of the present invention is, for example, a black zirconia composite sintered body that comprises $ZrO_2$, $HfO_2$, a stabilizer capable of preventing a phase transformation of zirconia, and $Nb_2O_5$ and/or $Ta_2O_5$,

wherein the total content of $ZrO_2$ and $HfO_2$ is 78 to 97.5 mol%, the content of the stabilizer is 1 to 12 mol%, and the total content of $Nb_2O_5$ and $Ta_2O_5$ is 1 to 9 mol% in total 100 mol% of $ZrO_2$, $HfO_2$, the stabilizer, $Nb_2O_5$, and $Ta_2O_5$,
the black zirconia composite sintered body further comprises capping elements or ions,
the stabilizer comprises $Y_2O_3$ and/or $CeO_2$,
the content of the capping elements or ions is more than 0 mol% and 3 mol% or less relative to total 100 mol% of $ZrO_2$, $HfO_2$, the stabilizer, $Nb_2O_5$, and $Ta_2O_5$, and
the black zirconia composite sintered body has a ratio A/B of 0.9 to 3, where A is the content of the stabilizer in mol%, and B is the total content of $Nb_2O_5$ and $Ta_2O_5$ in mol%.

A certain embodiment of the present invention is, for example, a black zirconia composite sintered body that comprises a zirconia enhancer, in addition to $ZrO_2$, $HfO_2$, a stabilizer capable of preventing a phase transformation of zirconia, $Nb_2O_5$ and/or $Ta_2O_5$, and capping elements or ions.

In a black zirconia composite sintered body comprising $ZrO_2$, $HfO_2$, a stabilizer capable of preventing a phase transformation of zirconia, and $Nb_2O_5$ and/or $Ta_2O_5$, the zirconia enhancer can improve the strength of the sintered body by acting integrally with the capping elements or ions.

In a black zirconia composite sintered body comprising a zirconia enhancer, it is also possible to appropriately modify the total content of $ZrO_2$ and $HfO_2$, the type and content of stabilizer, the total content of $Nb_2O_5$ and $Ta_2O_5$, the type and content of capping elements or ions, and the ratio A/B, as noted above.

In a black zirconia composite sintered body comprising a zirconia enhancer, in view of reducing a negative impact on the black color, the content of zirconia enhancer is preferably more than 0 mass% and 5.0 mass% or less relative to total 100 mass% of $ZrO_2$, $HfO_2$, the stabilizer capable of preventing a phase transformation of zirconia, $Nb_2O_5$, and $Ta_2O_5$. In view of achieving superior machinability and even greater strength through integrated action with capping elements or ions when combined with capping elements or ions, the content of zirconia enhancer is more preferably 0.01 mass% or more and 4.5 mass% or less, even more preferably 0.5 mass% or more and 4.0 mass% or less.

Examples of the zirconia enhancer include $TiO_2$ and $Al_2O_3$. The zirconia enhancer may be used alone, or two or more thereof may be used in combination.

A certain preferred embodiment is, for example, a black zirconia composite sintered body in which the zirconia enhancer comprises $TiO_2$, and the $TiO_2$ content is 0.6 to 3.7 mass%.

A certain preferred embodiment is, for example, a black zirconia composite sintered body that comprises $ZrO_2$, $HfO_2$, a stabilizer capable of preventing a phase transformation of zirconia, and $Nb_2O_5$ and/or $Ta_2O_5$,

wherein the total content of $ZrO_2$ and $HfO_2$ is 78 to 97.5 mol%, the content of the stabilizer is 1 to 12 mol%, and the total content of $Nb_2O_5$ and $Ta_2O_5$ is 1 to 9 mol% in total 100 mol% of $ZrO_2$, $HfO_2$, the stabilizer, $Nb_2O_5$, and $Ta_2O_5$,
the black zirconia composite sintered body further comprises capping elements or ions,
the stabilizer comprises $Y_2O_3$ and/or $CeO_2$,
the zirconia enhancer comprises $TiO_2$, and the $TiO_2$ content is 0.6 to 3.7 mass%,
the content of the capping elements or ions is more than 0 mol% and 3 mol% or less relative to total 100 mol% of $ZrO_2$, $HfO_2$, the stabilizer, $Nb_2O_5$, and $Ta_2O_5$, and
the black zirconia composite sintered body has a ratio A/B of 0.9 to 3, where A is the content of the stabilizer in mol%, and B is the total content of $Nb_2O_5$ and $Ta_2O_5$ in mol%.

A black zirconia composite sintered body of the present invention has an average crystal grain size of preferably 0.5 to 5.0 μm. In view of even superior machinability and strength, the average crystal grain size is more preferably 0.5 to 4.5 μm, even more preferably 1.0 to 4.0 μm. The method of measurement of average crystal grain size is as described in the EXAMPLES section below.

The average crystal grain size can be measured by adjusting the particle count in one SEM image field to about 50 or 100 particles, according to the method described in the EXAMPLES section below.

In the black zirconia composite sintered body, higher densities result in fewer internal voids and enhanced strength. In view of this, the density of the black zirconia composite sintered body is preferably 5.5 g/cm³ or more, more preferably 5.7 g/cm³ or more, even more preferably 5.9 g/cm³ or more.

Particularly preferably, the black zirconia composite sintered body is essentially void free.

The density of the composite sintered body can be calculated by dividing its mass by its volume ((mass of composite sintered body) / (volume of composite sintered body)).

Another embodiment of the present invention is, for example, a method for producing a black zirconia composite sintered body comprising the steps of:

fabricating a molded body with a raw material composition that comprises $ZrO_2$, $HfO_2$, a stabilizer capable of preventing a phase transformation of zirconia, and $Nb_2O_5$ and/or $Ta_2O_5$, wherein the total content of $ZrO_2$ and $HfO_2$ is 78 to 97.5 mol%, the content of the stabilizer is 1 to 12 mol%, and the total content of $Nb_2O_5$ and $Ta_2O_5$ is 1 to 9 mol% in total 100 mol% of $ZrO_2$, $HfO_2$, the stabilizer, $Nb_2O_5$, and $Ta_2O_5$, and that further comprises a capping agent; and sintering the molded body.

The raw material composition used for the production of the black zirconia composite sintered body comprises $ZrO_2$, $HfO_2$, a stabilizer capable of preventing a phase transformation of zirconia, $Nb_2O_5$ and/or $Ta_2O_5$, and a capping agent. The raw material composition of the black zirconia composite sintered body may be in a dry state, or in a liquid state containing liquid or contained in liquid. For example, the raw material composition may have a form of a powder, a granule or granulated material, a paste, or a slurry.

The raw material composition contains a capping agent to ensure that the black zirconia composite sintered body contains capping elements or ions. The capping agent is not particularly limited, as long as it is a compound with the potential to become a monovalent ion (+1 cation or -1 anion) in a solvent containing water. Examples include hydroxides, salts, halides (fluorides, chlorides, bromides, iodides), and cyanides containing elements or ions derived from a capping agent. The capping agent may be used alone, or two or more thereof may be used in combination.

Examples of hydroxides containing capping elements or ions include lithium hydroxide, sodium hydroxide, potassium hydroxide, rubidium hydroxide, cesium hydroxide, and francium hydroxide.

Examples of salts containing capping elements or ions include carbonates, bicarbonates, nitrates, hypochlorites, chlorites, chlorates, perchlorates, bromates, permanganates, metaborates, sulfides, and cyanide salts.

Examples of carbonates containing capping elements or ions include lithium carbonate, sodium carbonate, potassium carbonate, rubidium carbonate, francium carbonate, and cesium carbonate.

Examples of bicarbonates containing capping elements or ions include lithium bicarbonate, sodium bicarbonate, potassium bicarbonate, rubidium bicarbonate, francium bicarbonate, and cesium bicarbonate.

Examples of nitrates containing capping elements or ions include calcium nitrate, strontium nitrate, iron(II) nitrate, iron(III) nitrate, cobalt(II) nitrate, magnesium nitrate, gallium nitrate, yttrium(III) nitrate, lanthanum(III) nitrate, praseodymium nitrate, neodymium(III) nitrate, manganese(II) nitrate, europium nitrate, copper(II) nitrate, thorium nitrate, aluminum nitrate, nickel(II) nitrate, chromium(III) nitrate, titanium(IV) nitrate, zirconium nitrate, zirconium(IV) oxynitrate hydrate ($ZrO(NO_3)_2 \cdot xH_2O$), cerium(III) nitrate, tin nitrate, bismuth(III) nitrate, scandium(III) nitrate, indium(III) nitrate, and hafnium(IV) nitrate.

Examples of hypochlorites containing capping elements or ions include sodium hypochlorite, and calcium hypochlorite.

Examples of chlorites containing capping elements or ions include sodium chlorite, potassium chlorite, lithium chlorite, calcium chlorite, magnesium chlorite, barium chlorite, copper(II) chlorite, copper(III) chlorite, silver chlorite, and nickel chlorite.

Examples of chlorates containing capping elements or ions include calcium chlorate, barium chlorate, cobalt chlorate, nickel chlorate, magnesium chlorate, zinc chlorate, and copper chlorate.

Examples of perchlorates containing capping elements or ions include iron(III) perchlorate, barium perchlorate, calcium perchlorate, cobalt perchlorate, nickel perchlorate, magnesium perchlorate, beryllium perchlorate, aluminum perchlorate, and cerium perchlorate.

Examples of bromates containing capping elements or ions include neodymium bromate, lanthanum bromate, and praseodymium bromate.

Examples of permanganates containing capping elements or ions include calcium(VII) permanganate, potassium(VII) permanganate, and sodium(VII) permanganate.

Examples of metaborates containing capping elements or ions include sodium metaborate, and barium metaborate.

Examples of sulfides containing capping elements or ions include copper(I) sulfide.

Examples of cyanide salts containing capping elements or ions include barium cyanide, sodium cyanide, potassium cyanide, and calcium cyanide.

Examples of fluorides containing capping elements or ions include lithium fluoride, sodium fluoride, potassium fluoride, rubidium fluoride, cesium fluoride, francium fluoride, beryllium fluoride, magnesium fluoride, calcium fluoride, strontium fluoride, barium fluoride, scandium(III) fluoride, yttrium(III) fluoride, lanthanum(III) fluoride, cerium(III) fluoride, neodymium(III) fluoride, titanium(III) fluoride, titanium(IV) fluoride, zirconium(IV) fluoride, hafnium(IV) fluoride, tantalum(V) fluoride, manganese(II) fluoride, manganese(III) fluoride, iron(II) fluoride, iron(III) fluoride, copper(II) fluoride, zinc(II) fluoride, aluminum fluoride, chromium(III) fluoride, bismuth(III) fluoride, indium(III) fluoride, and tin(II) fluoride.

Examples of chlorides containing capping elements or ions include zirconium oxychloride, lithium chloride, sodium chloride, potassium chloride, rubidium chloride, cesium chloride, francium chloride, beryllium chloride, magnesium chloride, calcium chloride, strontium chloride, barium chloride, scandium(III) chloride, yttrium(III) chloride, lanthanum(III) chloride, cerium(III) chloride, praseodymium chloride, neodymium(III) chloride, samarium chloride, europium chloride, titanium(III) chloride, titanium(IV) chloride, zirconium(IV) chloride, hafnium(IV) chloride, tantalum(V) chloride, manganese chloride, iron(II) chloride, iron(III) chloride, cobalt(II) chloride, nickel(II) chloride, copper(I) chloride, copper(II) chloride, zinc(II) chloride, aluminum chloride, gallium chloride, bismuth(III) chloride, indium(I) chloride, indium(III) chloride, and tin(II) chloride.

Examples of bromides containing capping elements or ions include lithium bromide, sodium bromide, potassium bromide, rubidium bromide, cesium bromide, francium bromide, beryllium bromide, magnesium bromide, calcium bromide, strontium bromide, barium bromide, scandium(III) bromide, yttrium(III) bromide, cerium(III) bromide, neodymium(III) bromide, titanium(IV) bromide, zirconium(IV) bromide, tantalum(V) bromide, manganese(II) bromide, iron(II) bromide, iron(III) bromide, cobalt(II) bromide, nickel(II) bromide, copper(I) bromide, copper(II) bromide, zinc(II) bromide, chromium(III) bromide, bismuth(III) bromide, vanadium(III) bromide, indium(III) bromide, and tin bromide.

Examples of iodides containing capping elements or ions include iodides such as lithium iodide, sodium iodide, potassium iodide, rubidium iodide, cesium iodide, francium iodide, beryllium iodide, calcium iodide, magnesium iodide, strontium iodide, barium iodide, scandium(III) iodide, yttrium(III) iodide, lanthanum(III) iodide, cerium(III) iodide, neodymium(III) iodide, titanium(IV) iodide, zirconium(IV) iodide, hafnium(IV) iodide, tantalum(V) iodide, manganese(II) iodide, iron(II) iodide, iron(III) iodide, cobalt(II) iodide, nickel(II) iodide, copper(I) iodide, zinc(II) iodide, aluminum iodide, chromium(III) iodide, vanadium(II) iodide, bismuth(III) iodide, indium(III) iodide, tin(II) iodide, and tin(IV) iodide.

Commercially available zirconia powders can be used for $ZrO_2$ and $HfO_2$. Examples of such commercially available products include zirconia powders manufactured by Tosoh Corporation under the trade names Zpex® ($Y_2O_3$ content: 3 mol%), Zpex® 4 ($Y_2O_3$ content: 4 mol%), Zpex® 4 Smile® ($Y_2O_3$ content: 5.5 mol%), TZ-3Y ($Y_2O_3$ content: 3 mol%), TZ-3YS ($Y_2O_3$ content: 3 mol%), TZ-4YS ($Y_2O_3$ content: 4 mol%), TZ-6Y ($Y_2O_3$ content: 6 mol%), TZ-6YS ($Y_2O_3$ content: 6 mol%), TZ-8YS ($Y_2O_3$ content: 8 mol%), TZ-10YS ($Y_2O_3$ content: 10 mol%), TZ-3Y-E ($Y_2O_3$ content: 3 mol%), TZ-3YS-E ($Y_2O_3$ content: 3 mol%), TZ-3YB-E ($Y_2O_3$ content: 3 mol%), TZ-3YSB-E ($Y_2O_3$ content: 3 mol%), TZ-3YB ($Y_2O_3$ content: 3 mol%), TZ-3YSB ($Y_2O_3$ content: 3 mol%), TZ-3Y20AB ($Y_2O_3$ content: 3 mol%), TZ-8YSB ($Y_2O_3$ content: 8 mol%), and TZ-0 ($Y_2O_3$ content: 0 mol%). These commercially available zirconia powders also contain $HfO_2$. It is also possible to use commercially available products additionally containing $Y_2O_3$. The raw material composition of the present invention may use zirconia powders in which $Y_2O_3$ is uniformly dispersed as a solid solution, as in the TZ series of the commercially available products listed above (those with "TZ" in the product names).

The method of production of zirconia powder is not particularly limited, and known methods may be employed, for example, such as the breakdown process, where coarse particles are pulverized into fine powder, or the building-up process, where synthesis occurs through nucleation and growth from atoms or ions.

The type of zirconia powder in the raw material composition is not particularly limited. It is possible to additionally incorporate stabilizer particles when the zirconia powder comprises $ZrO_2$ and $HfO_2$ but does not contain a stabilizer, or when increasing the content of stabilizer as needed. The stabilizer particles are not particularly limited, as long as the content of the stabilizer within the black zirconia composite sintered body can be adjusted to the predetermined ranges mentioned above.

For example, the stabilizer particles may be commercially available products, and may be prepared by pulverizing a commercially available powder using a known pulverizing mixer (such as a ball mill).

The stabilizer may be either a stabilizer not dissolved in $ZrO_2$ and $HfO_2$ as a solid solution, or a stabilizer dissolved in $ZrO_2$ and $HfO_2$ as a solid solution.

In view of ease of obtaining the desired black zirconia composite sintered body, a certain preferred embodiment is, for example, a method for producing a black zirconia composite sintered body in which the stabilizer (preferably, $Y_2O_3$) comprises a stabilizer not dissolved in $ZrO_2$ and $HfO_2$ as a solid solution within the raw material composition. The presence of stabilizers not dissolved in zirconia as a solid solution can be verified, for example, through X-ray diffraction (XRD) patterns.

The presence of peaks derived from the stabilizer in an XRD pattern of the raw material composition or molded body means the presence of a stabilizer that is not dissolved in $ZrO_2$ and $HfO_2$ in the raw material composition or molded body.

A peak derived from the stabilizer is basically not observable in an XRD pattern when the stabilizer is fully dissolved in $ZrO_2$ and $HfO_2$ as a solid solution. It is, however, possible, depending on the crystal state or other conditions of the stabilizer, that the stabilizer is not dissolved in $ZrO_2$ and $HfO_2$ as a solid solution even when the XRD pattern does not show peaks for stabilizers.

The following describes situations where the stabilizer comprises a stabilizer not dissolved in $ZrO_2$ and $HfO_2$ as a solid solution, with yttria serving as an example of the stabilizer.

In the raw material composition or molded body of the present invention, the percentage presence $f_y$ of yttria not dissolved in $ZrO_2$ and $HfO_2$ as a solid solution (hereinafter, also referred to as "undissolved yttria") can be calculated using the following mathematical formula (1).

$$f_y = I_{29}/(I_{28} + I_{29} + I_{30}) \times 100$$

where $f_y$ represents the fraction (%) of undissolved yttria, $I_{28}$ represents the area intensity of a peak near $2\theta = 28°$, where the main peak of the monoclinic crystal system appears in XRD measurement, $I_{29}$ represents the area intensity of a peak near $2\theta = 29°$, where the main peak of yttria appears in XRD measurement, and $I_{30}$ represents the area intensity of a peak near $2\theta = 30°$, where the main peak of the tetragonal or cubic crystal system appears in XRD measurement.

When additionally using stabilizers other than yttria, the formula can be applied to calculate the percentage presence of undissolved stabilizers other than yttria by substituting $I_{29}$ with the peaks of other stabilizers.

In view of considerations such as ease of obtaining the desired black zirconia composite sintered body, the percentage presence $f_y$ of undissolved yttria is preferably higher than 0%, more preferably 1% or more, even more preferably 2% or more, particularly preferably 3% or more. The upper limit for the percentage presence $f_y$ of undissolved yttria may be, for example, 25% or less. Preferably, the upper limit of percentage presence $f_y$ of undissolved yttria depends on the yttria content in the raw material composition or molded body.

For example, the percentage presence $f_y$ of undissolved yttria falls within the following ranges when the yttria content in the raw material composition or molded body of the present invention is 3 mol% or more and 8 mol% or less.

When the yttria content is 3 mol% or more and less than 4.5 mol%, $f_y$ may be 15% or less. When the yttria content is 4.5 mol% or more and less than 5.8 mol%, $f_y$ may be 20% or less. When the yttria content is 5.8 mol% or more and 8 mol% or less, $f_y$ may be 25% or less.

For example, when the yttria content is 3 mol% or more and less than 4.5 mol%, $f_y$ is preferably 2% or more, more preferably 3% or more, even more preferably 4% or more, particularly preferably 5% or more.

When the yttria content is 4.5 mol% or more and less than 5.8 mol%, $f_y$ is preferably 3% or more, more preferably 4% or more, even more preferably 5% or more, yet more preferably 6% or more, particularly preferably 7% or more.

When the yttria content is 5.8 mol% or more and 8 mol% or less, $f_y$ is preferably 4% or more, more preferably 5% or more, even more preferably 6% or more, yet more preferably 7% or more, particularly preferably 8% or more.

In the raw material composition or molded body of the present invention, it is not necessarily required for the stabilizer to be fully dissolved in $ZrO_2$ and $HfO_2$ as a solid solution. In the present invention, "stabilizer being dissolved as a solid solution" means that, for example, the elements (atoms) contained in the stabilizer are dissolved in $ZrO_2$ and $HfO_2$ as a solid solution.

There is no particular restriction on $Nb_2O_5$ and/or $Ta_2O_5$ incorporated in the raw material composition of the present invention, as long as the content of $Nb_2O_5$ and/or $Ta_2O_5$ within the black zirconia composite sintered body can be adjusted in the predetermined ranges mentioned above. For example, commercially available products may be used for $Nb_2O_5$ and/or $Ta_2O_5$ without any particular restrictions. These may be used after pulverizing its powder using a known pulverizing mixer (such as a ball mill).

An example method of obtaining the raw material composition involves a process whereby the raw material composition is prepared by, for example, wet mixing each raw material of the raw material composition ($ZrO_2$, $HfO_2$, a stabilizer, $Nb_2O_5$ and/or $Ta_2O_5$, a capping agent (for example, a compound with the potential to become a monovalent ion in a solvent containing water), and, optionally, a zirconia enhancer) in a solvent containing water.

The method for wet mixing the raw materials in a solvent containing water is not particularly limited. For example, the raw materials may be formed into a slurry through wet pulverization and mixing using a known pulverizing mixer (such as a ball mill). The slurry can then be dried and granulated to produce a granular raw material composition.

In the wet mixing process, it is possible to additionally include additives such as binders, plasticizers, dispersants, emulsifiers, antifoaming agents, pH adjusters, and lubricants. The additives may be used alone, or two or more thereof may be used in combination.

The binder may be added to the pulverized slurry after the slurry is formed by adding a primary powder mixture of $ZrO_2$, $HfO_2$, $Y_2O_3$, $Nb_2O_5$ and/or $Ta_2O_5$, and a capping agent into water.

The binder is not particularly limited, and known binders may be used. Examples of the binders include polyvinyl alcohol binders, acrylic binders, wax binders (such as paraffin wax), methyl cellulose, carboxymethyl cellulose, polyvinyl butyral, polymethylmethacrylate, ethyl cellulose, polyethylene, polypropylene, ethylene-vinyl acetate copolymer, polystyrene, atactic polypropylene, and methacrylic resin.

Examples of the plasticizers include polyethylene glycol, glycerin, propylene glycol, and dibutyl phthalic acid.

Examples of the dispersants include ammonium polycarboxylates (such as triammonium citrate), ammonium polyacrylate, acrylic copolymer resin, acrylic acid ester copolymer, polyacrylic acid, bentonite, carboxymethyl cellulose, anionic surfactants (for example, polyoxyethylene alkyl ether phosphoric acid esters such as polyoxyethylene lauryl ether phosphoric acid ester), non-ionic surfactants, oleic glyceride, amine salt surfactants, oligosaccharide alcohols, and stearic acid.

Examples of the emulsifiers include alkyl ethers, phenyl ethers, and sorbitan derivatives.

Examples of the antifoaming agents include alcohols, polyethers, silicone, and waxes.

Examples of the pH adjusters include ammonia, and ammonium salts (including ammonium hydroxides such as tetramethylammonium hydroxide).

Examples of the lubricants include polyoxyethylene alkyl ethers, and waxes.

The solvent used for wet mixing is not particularly limited, as long as it contains water. By using organic solvents, the solvent may be a mixed solvent of water and organic solvent. Alternatively, the solvent may be solely water.

Examples of the organic solvents include ketone solvents such as acetone, and ethyl methyl ketone; and alcohol solvents such as ethanol, 1-propanol, 2-propanol, 2-methyl-2-propanol, glycerin, diglycerin, polyglycerin, propylene glycol, dipropylene glycol, polypropylene glycol, ethylene glycol, diethylene glycol, polyethylene glycol, polyethylene glycol monomethyl ether, 1,2-pentadiol, 1,2-hexanediol, and 1,2-octanediol.

The raw material composition used for the black zirconia composite sintered body in the present invention may comprise components other than $ZrO_2$, $Y_2O_3$, $Nb_2O_5$, $Ta_2O_5$, the capping agent, and the optionally incorporated zirconia enhancer, provided that the present invention can exhibit its effects. Examples of such additional components include colorants (pigments and composite pigments), fluorescent agents, and $SiO_2$. The additional components may be used alone, or two or more thereof may be used as a mixture.

Examples of the pigments include oxides of at least one element selected from the group consisting of V, Cr, Mn, Fe, Co, Ni, Zn, Y, Zr, Sn, Sb, Bi, Ce, Pr, Sm, Eu, Gd, Tb, and Er (specifically, such as NiO, and $Cr_2O_3$), preferably oxides of at least one element selected from the group consisting of V, Cr, Mn, Fe, Co, Ni, Zn, Y, Zr, Sn, Sb, Bi, Ce, Pr, Sm, Eu, Gd, and Tb, more preferably oxides of at least one element selected from the group consisting of V, Cr, Mn, Fe, Co, Ni, Zn, Y, Zr, Sn, Sb, Bi, Ce, Sm, Eu, Gd, and Tb. The pigments may exclude $Y_2O_3$ and $CeO_2$.

Examples of the composite pigments include $(Zr,V)O_2$, $Fe(Fe,Cr)_2O_4$, $(Ni,Co,Fe)(Fe,Cr)_2O_4 \cdot ZrSiO_4$, and $(Co,Zn)Al_2O_4$.

Examples of the fluorescent agents include $Y_2SiO_5$:Ce, $Y_2SiO_5$:Tb, $(Y,Gd,Eu)BO_3$, $Y_2O_3$:Eu, YAG:Ce, $ZnGa_2O_4$:Zn, and $BaMgAl_{10}O_{17}$:Eu.

Following its production, the raw material composition is molded to fabricate a molded body. The molding method is not particularly limited, and known molding methods can be used (for example, such as press molding).

When producing a zirconia molded body using a method that includes press molding the raw material composition, there are no specific limitations on the press molding method, and press molding may be achieved using known press molding machines. Specific examples of press molding methods include uniaxial pressing.

The molding pressure is appropriately set to an optimum value according to the desired size of molded body, open porosity, biaxial flexural strength, and the particle size of raw material powder. Typically, the molding pressure ranges from 5 MPa to 1,000 MPa. Increasing the molding pressure during molding in the method of production above allows for setting lower values for open porosity and increasing the density of the molded body by filling the voids more effectively in the molded body. To increase the density of the zirconia molded body obtained, cold isostatic pressing (CIP) may be applied after uniaxial pressing.

Following its production, the molded body is sintered.

The term "molded body" refers to a state that is neither a semi-sintered state (pre-sintered state) nor a sintered state. That is, the molded body is distinct from pre-sintered bodies and sintered bodies in that it has not been fired after molding.

The sintering temperature (highest sintering temperature) for obtaining the black zirconia composite sintered body is, for example, preferably 1,300°C or more, more preferably 1,350°C or more, even more preferably 1,400°C or more, yet more preferably 1,450°C or more, particularly preferably 1,500°C or more. The sintering temperature is, for example, preferably 1,680°C or less, more preferably 1,650°C or less, even more preferably 1,600°C or less. Preferably, the method for producing a black zirconia composite sintered body of the present invention involves firing the molded body at a highest sintering temperature of 1,400 to 1680°C. The highest sintering temperature is preferably a temperature in the atmosphere.

The hold time (retention time) at the highest sintering temperature is preferably 30 hours or less, more preferably 20 hours or less, even more preferably 10 hours or less, yet more preferably 5 hours or less, particularly preferably 3 hours or less, most preferably 2 hours or less, depending on the temperature. The hold time may be 25 minutes or less, 20 minutes or less, or 15 minutes or less. The hold time is preferably 1 minute or more, more preferably 5 minutes or more, even more preferably 10 minutes or more. A production method of the present invention enables the fabrication of a black zirconia composite sintered body having superior flexural strength and machinability in a manner that depends on the content of the stabilizer. The sintering time can be reduced, as long as the present invention can exhibit its effects. Shortening the sintering time can improve production efficiency and reduce energy costs.

In the method for producing a black zirconia composite sintered body of the present invention, the rate of temperature increase in sintering the molded body is not particularly limited, and is preferably 0.1°C/min or more, more preferably 0.2°C/min or more, even more preferably 0.5°C/min or more. The rate of temperature increase is preferably 50°C/min or less, more preferably 30°C/min or less, even more preferably 20°C/min or less. Productivity improves when the rate of temperature increase is at or above these lower limits.

A common zirconia furnace can be used for the sintering process of the molded body. The zirconia furnace may be a commercially available product. Examples of commercially available products include Noritake KATANA® F-1, F-1N, F-2 (SK Medical Electronics Co., Ltd.).

In the production method of black zirconia composite sintered bodies, a black zirconia composite sintered body can be obtained by sintering a molded body that has incorporated a black pigment.

Examples of the black pigment include black organic pigments, color-blended organic pigments, and inorganic pigments.

Examples of the black organic pigments include carbon black, perylene black, aniline black, and benzofuranone-based pigments. These may be resin-coated.

Examples of the color-blended organic pigments include pigments with a pseudo-black hue created by blending two or more pigments of different colors such as red, blue, green, purple, yellow, magenta, and/or cyan.

Examples of the black inorganic pigments include graphite, fine metal particles (such as titanium, copper, iron, manganese, cobalt, chromium, nickel, zinc, calcium, and silver), metal oxides, metal composite oxides, metal sulfides, metal nitrides, metal oxynitrides, and metal carbides.

Note here that, when the black pigment is a pigment containing titanium, it is preferable that the total content in terms of titanium do not exceed the upper limit of 5.0 mass% for the $TiO_2$ in the zirconia enhancer.

In addition to or instead of the method where a black pigment is added to the molded body, it is preferable to conduct reduction firing for the molded body, aside from sintering at the highest sintering temperature.

A certain preferred embodiment is, for example, a method for producing a black zirconia composite sintered body in which the sintering process for the molded body includes reduction firing, aside from sintering at the highest sintering temperature.

The reduction firing is not particularly limited, as long as it involves sintering in a reducing atmosphere. An example is hot isostatic pressing (HIP) in a reducing atmosphere. A HIP process under a reducing atmosphere causes blackening due to oxygen deficiency, leading to the production of black zirconia composite sintered bodies. Additionally, a HIP process can further increase the strength of the black zirconia composite sintered body.

In the following, the term "primary sintered body" is used to refer to sintered bodies obtained through sintering at the highest sintering temperature, whereas "HIP sintered body" is used to refer to sintered bodies after a HIP process.

Known hot isostatic pressing (HIP) devices can be used for HIP process.

The temperature for HIP process is not particularly limited. However, for advantages such as obtaining a high-strength and dense black zirconia composite sintered body, the HIP temperature is preferably 1,200°C or more, more preferably 1,300°C or more, even more preferably 1,400°C or more. The HIP temperature is preferably 1,700°C or less, more preferably 1,650°C or less, even more preferably 1,600°C or less.

In the method for producing a black zirconia composite sintered body of the present invention, the HIP pressure in the HIP process of the primary sintered body is not particularly limited. However, for advantages such as obtaining a high-strength and dense sintered body, the HIP pressure is preferably 100 MPa or more, more preferably 125 MPa or more, even more preferably 130 MPa or more. The upper limit of HIP pressure is not particularly limited, and may be, for example, 400 MPa or less, 300 MPa or less, or 200 MPa or less.

In the method for producing a black zirconia composite sintered body of the present invention, the rate of temperature increase in the HIP process of the primary sintered body is not particularly limited, and is preferably 0.1°C/min or more, more preferably 0.2°C/min or more, even more preferably 0.5°C/min or more. The rate of temperature increase is preferably 50°C/min or less, more preferably 30°C/min or less, even more preferably 20°C/min or less. Productivity improves when the rate of temperature increase is at or above these lower limits.

In the method for producing a black zirconia composite sintered body of the present invention, the duration of HIP in the HIP process of the primary sintered body is not particularly limited. However, for advantages such as obtaining a high-strength and dense sintered body, the duration of the HIP process is preferably 5 minutes or more, more preferably 10 minutes or more, even more preferably 30 minutes or more. The duration of the HIP process is preferably 10 hours or less, more preferably 6 hours or less, even more preferably 3 hours or less.

In the method for producing a black zirconia composite sintered body of the present invention, the pressure medium in the HIP process of the primary sintered body in a reducing atmosphere is not particularly limited. However, in view of a low impact on zirconia, the pressure medium may be at least one selected from the group consisting of various inert gases (for example, nitrogen, argon).

In view of enhancing the efficiency of firing in a reducing atmosphere, lowering the L* value of the composite sintered body, and producing a more intensely black zirconia composite sintered body, it is preferable that the reduction firing process be carried out in the presence of carbon.

The carbon used in the reduction firing process is not particularly limited. Examples include Referthermo (a common thermal history sensor containing small amounts of organic components (organic binders (PVA·PEG-based)).

A black zirconia composite sintered body of the present invention may be a primary sintered body or HIP sintered body with no particular restriction, provided that the present invention can exhibit its effects.

A black zirconia composite sintered body of the present invention exhibits excellent machinability despite being a sintered body. It is accordingly not necessary to machine it as a mill blank of a pre-sintered body in a semi-sintered state before sintering into a sintered body.

Nonetheless, the black zirconia composite sintered body can be produced using a method whereby a molded body obtained from the raw material composition is pre-sintered to form a semi-sintered-state pre-sintered body, and this pre-sintered body, unprocessed, is machined before sintering it to form a sintered body.

Another certain embodiment is, for example, a method for producing a black zirconia composite sintered body that comprises the steps of fabricating a molded body using the raw material composition, pre-sintering the molded body to form a zirconia pre-sintered body (pre-sintering step), and sintering the zirconia pre-sintered body.

In order to ensure block formation, the firing temperature (pre-sintering temperature) in the pre-sintering step is, for example, preferably 800°C or more, more preferably 900°C or more, even more preferably 950°C or more.

The pre-sintering temperature is, for example, preferably 1,200°C or less, more preferably 1,150°C or less, even more preferably 1,100°C or less. The preferred range of pre-sintering temperatures is, for example, 800°C to 1,200°C. It is believed that, at these pre-sintering temperatures, no significant progression of the formation of the solid solution of the stabilizer occurs in the pre-sintering step.

A zirconia pre-sintered body of the present invention refers to a state where $ZrO_2$ particles have formed necks between particles but the $ZrO_2$ particles (powder) have not been fully sintered (semi-sintered state).

The zirconia pre-sintered body has a density of preferably 2.7 g/cm$^3$ or more. The zirconia pre-sintered body has a density of preferably 4.0 g/cm$^3$ or less, more preferably 3.8 g/cm$^3$ or less, even more preferably 3.6 g/cm$^3$ or less. Processing becomes easier when the density falls within these ranges. The density of the pre-sintered body can be calculated, for example, as the mass-to-volume ratio of the pre-sintered body ((mass of pre-sintered body) / (volume of pre-sintered body)).

The zirconia pre-sintered body has a three-point flexural strength of preferably 15 to 70 MPa, more preferably 18 to 60 MPa, even more preferably 20 to 50 MPa.

The flexural strength can be measured in compliance with ISO 6872:2015 except for the specimen size, using a specimen measuring 5 mm in thickness, 10 mm in width, and 50 mm in length. For surface finishing, the specimen surfaces, including chamfered surfaces (45° chamfers at the corners of specimen), are finished longitudinally with #600 sandpaper. The specimen is disposed in such an orientation that its widest face is perpendicular to the vertical direction (loading direction). In the flexure test, measurements are made at a span of 30 mm with a crosshead speed of 1.0 mm/min.

The sintering step for the zirconia pre-sintered body can be conducted using the same method and conditions (such as temperature and pressure) used to sinter the molded body. Accordingly, in embodiments of the production method using zirconia pre-sintered bodies, the term "molded body" can be read as referring to "pre-sintered body".

A black zirconia composite sintered body of the present invention excels in strength. A black zirconia composite sintered body of the present invention has a biaxial flexural strength of preferably 300 MPa or more, more preferably 350 MPa or more, even more preferably 400 MPa or more, yet more preferably 450 MPa or more, particularly preferably 500 MPa or more. A black zirconia composite sintered body of the present invention, with its biaxial flexural strength falling in these ranges, can reduce defects, for example, such as damage. The upper limit of biaxial flexural strength is not particularly limited, and may be, for example, 1,200 MPa or less, or 1,000 MPa or less. The biaxial flexural strength of the black zirconia composite sintered body can be measured in compliance with ISO 6872:2015.

In view of providing superior design qualities, it is preferable for a black zirconia composite sintered body of the present invention to have a desired shade. The shade can be evaluated in terms of L*, |a*|, and |b*|.

The values of L*, |a*|, and |b*| can be calculated by measuring L*, a*, b* on a measurement sample of 15 mm diameter and 1.2 mm thickness according to L*a*b* color system (JIS Z 8781-4:2013 Color Measurements - Part 4: CIE 1976 L*a*b* color space), using, for example, a spectrophotometer CM-3610A (manufactured by Konica Minolta Inc.) in SCI measurement mode with a D65 illuminant, with an area ratio of measurement area to illumination area of 8 mm:11 mm in diameter.

Specifically, concerning shades, a black zirconia composite sintered body of the present invention has an L* value of preferably 60 or less, more preferably 55 or less, even more preferably 50 or less as measured on a sample of 15 mm diameter and 1.2 mm thickness against a white background (underlay) (the opposite side of the sample from the measurement device is white).

Additionally, a black zirconia composite sintered body of the present invention has an |a*| value of preferably 3 or less, more preferably 2 or less, even more preferably 1 or less as measured on the same sample under the same measurement conditions.

Furthermore, a black zirconia composite sintered body of the present invention has a |b*| value of preferably 3 or less, more preferably 2.5 or less, even more preferably 2 or less as measured on the same sample under the same measurement conditions.

A certain preferred embodiment is, for example, a black zirconia composite sintered body with an L* value of 60 or less, an |a*| value of 3 or less, and a |b*| value of 3 or less as measured on the aforementioned sample under the same measurement conditions.

Another certain preferred embodiment is, for example, a black zirconia composite sintered body with an L* value of 50 or less, an |a*| value of 1 or less, and a |b*| value of 2 or less as measured on the aforementioned sample under the same measurement conditions.

With the values of L*, |a*|, and |b*| falling in these ranges, it is possible to obtain a black zirconia composite sintered body that exhibits superior design qualities.

In view of ease of providing even superior design qualities, a certain preferred embodiment is, for example, a black zirconia composite sintered body with L* $\leq$ 60, |a*| $\leq$ 3, and |b*| $\leq$ 3 as measured on a sample of 15 mm diameter and 1.2 mm thickness against a white background according to L*a*b* color system.

In view of ease of providing superior design qualities, a black zirconia composite sintered body of the present invention has a chroma C* of preferably 10 or less, more preferably 8 or less, even more preferably 6 or less as calculated in terms of a shade from a* and b* measured against a white background according to L*a*b* color system using a sample measuring 15 mm in diameter and 1.2 mm in thickness.

Chroma C* can be calculated as chroma $C^* = ((a^*)^2 + (b^*)^2)^{1/2}$, based on the average a* and b* values obtained through the method described above.

A black zirconia composite sintered body of the present invention has a coefficient of thermal expansion (CTE) of preferably $8 \times 10^{-6}/°C$ to $13 \times 10^{-6}/°C$, more preferably $8.5 \times 10^{-6}/°C$ to $12 \times 10^{-6}/°C$, even more preferably $9 \times 10^{-6}/°C$ to $11 \times 10^{-6}/°C$.

A black zirconia composite sintered body of the present invention, with its coefficient of thermal expansion (CTE) falling in these ranges, can be suitably used with metallic materials.

The coefficient of thermal expansion (CTE) can be measured in compliance with ISO 6872:2015 with the analysis temperature range set to 25°C to 500°C and at a rate of temperature increase of, for example, 5°C/min.

A black zirconia composite sintered body of the present invention is particularly suited for zirconia parts that require irregular or complex shapes and strength.

Compared to sintered bodies produced solely by existing production methods (such as injection molding, CIP, casting, and 3D printing), a black zirconia composite sintered body of the present invention can be directly processed as a sintered body.

This can be cost-effective, for example, when a desired zirconia part is obtained in short time periods. For parts that are complex in shape and difficult to produce with traditional methods, this technique eliminates the need for mechanical fitting of multiple parts, allowing for the production of zirconia parts with maintained high strength. Furthermore, because the sintered body is directly processable, the sintering process can be eliminated when precise dimensions are needed, eliminating uneven shrinkage during firing, leading to high-precision zirconia parts. For machining, commercially available machining equipment can be used, for example.

A black zirconia composite sintered body of the present invention is also applicable to methods of manufacture in applications, specifically, such as in jewelry goods (including brooches, tie pins, handbag hardware, and bracelets), engine parts and interior components of mobility vehicles such as aircraft and automobiles, display panel frames, construction members, components of portable devices, high-end daily-use items, watch components (including bands, bezels, dials, and cases), external parts such as casings of electronic devices (for example, smartphones), lighter cases, cases for cosmetics, cell phone cases, and earphone housings, as well as electrical appliance components, components of household goods, logos for various products, and toy parts.

The zirconia parts can also be fitted with different materials to create composite components.

The present invention encompasses embodiments combining all or part of the foregoing features, provided that the present invention can exhibit its effects with such combinations made in various forms within the technical idea of the present invention.

EXAMPLES

The present invention is described below in greater detail through Examples. It is to be noted, however, that the present invention is in no way limited by the following Examples, and various modifications may be made by a person with ordinary skill in the art within the technical idea of the present invention. In the following Examples and Comparative Examples, average particle diameter refers to average primary particle diameter, and can be determined using a laser diffraction scattering method. Specifically, the average particle diameter can be measured by volume using a laser diffraction particle size distribution analyzer (SALD-2300, manufactured by Shimadzu Corporation) with a 0.2% sodium hexametaphosphate aqueous solution used as dispersion medium.

[Examples 1 to 17 and Comparative Examples 1 to 4]

The measurement samples for Examples and Comparative Examples were prepared by fabricating a granular raw material composition, a molded body, and a sintered body (the fabrication of a primary sintered body, as well as HIP processing) through these processes.

[Fabrication of Granular Raw Material Composition]

To fabricate a granular raw material composition for each Example and Comparative Example, a mixture was prepared by combining commercially available powders of $ZrO_2$, $Y_2O_3$, $Nb_2O_5$, and $Ta_2O_5$, along with a capping agent, and, optionally, a zirconia enhancer powder ($TiO_2$ powder and/or $Al_2O_3$ powder), according to the formulations specified in Tables 1 and 2. Subsequently, water was added to prepare a slurry, and the slurry was pulverized wet with a ball mill until it had an average particle diameter of 0.13 $\mu$m or less. After adding a binder to the pulverized slurry, the slurry was dried with a spray dryer to obtain a granular raw material composition (hereinafter, also referred to simply as "raw material composition"). This raw material composition was used to produce a molded body, as detailed below. Here, the average particle diameter is a measured value determined by volume using a laser diffraction particle size distribution analyzer (SALD-2300, manufactured by Shimadzu Corporation) with a 0.2% sodium hexametaphosphate aqueous solution used as dispersion medium.

In Example 17, TZ-3Y ($Y_2O_3$ content: 3 mol%) and TZ-6Y ($Y_2O_3$ content: 6 mol%) were mixed in a ratio of 18.7:81.3, and the proportion of each component was adjusted according to the formulation specified in Table 1.

[Fabrication of Molded Body]

For each Example and Comparative Example, pellet-shaped molded bodies and block-shaped molded bodies were produced in preparation for the fabrication of sintered body samples for both strength evaluation and processability evaluation, as follows.

A cylindrical mold with a diameter of 19 mm was used to create pellet-shaped molded bodies. The raw material composition was placed in the mold to ensure that sintering produces a black zirconia composite sintered body with a thickness of 1.2 mm.

Subsequently, the raw material composition was molded under a surface pressure of 200 MPa to obtain a pellet-shaped molded body, using a uniaxial press molding machine.

For block-shaped molded bodies, the raw material composition was placed in a mold with inside dimensions of 19 mm × 18 mm, ensuring that sintering produces a black zirconia composite sintered body with a height of 14.5 mm.

Subsequently, the raw material composition was molded under a surface pressure of 200 MPa to obtain a block-shaped molded body, using a uniaxial press molding machine.

[Fabrication of Primary Sintered Body]

The pellet-shaped and block-shaped molded bodies were held for 2 hours in the atmosphere at the firing temperatures specified in Tables 1 and 2, using the Noritake KATANA® F-1 furnace manufactured by SK Medical Electronics Co., Ltd. This resulted in zirconia sintered body (primary sintered body) samples in both pellet and block shapes.

[Fabrication of Black Zirconia Composite Sintered Body (HIP Sintered Body)]

The pellet-shaped and block-shaped zirconia sintered bodies (primary sintered bodies) were held for 2 hours at 150 MPa and the HIP temperatures specified in Tables 1 and 2, with or without Referthermo, using the HIP device $O_2$-Dr.HIP (Kobe Steel, Ltd.), with argon gas employed as the pressure medium. This resulted in black zirconia composite sintered body (HIP sintered body) samples in both pellet and block shapes. The pellet-shaped samples had a diameter of 15 mm and a thickness of 1.2 mm. The block-shaped samples measured 15.7 mm in width, 16.5 mm in length, and 14.5 mm in height.

The content of each component in the sintered bodies presented in Tables 1 and 2 was calculated from the quantities of the raw materials used.

The content (mol%) of capping elements or ions in Tables 1 and 2 refers to the proportion external to total 100 mol% of $ZrO_2$, $HfO_2$, the stabilizer, $Nb_2O_5$, and $Ta_2O_5$.

The content (mol%) of $ZrO_2$, $HfO_2$, the stabilizer, $Nb_2O_5$, and $Ta_2O_5$ in Tables 1 and 2 refers to the content of each component in total 100 mol% of $ZrO_2$, $HfO_2$, the stabilizer, $Nb_2O_5$, and $Ta_2O_5$. For $ZrO_2$ and $HfO_2$, the content is presented as the total content of $ZrO_2$ and $HfO_2$.

The content (mass%) of $TiO_2$ and $Al_2O_3$ in Tables 1 and 2 refers to the proportion external to total 100 mass% of $ZrO_2$, $HfO_2$, the stabilizer, $Nb_2O_5$, and $Ta_2O_5$.

A/B in Tables 1 and 2 represents the ratio of A to B, where A is the $Y_2O_3$ content in mol%, and B is the total content of $Nb_2O_5$ and $Ta_2O_5$ in mol%.

[Shade Evaluation of Black Zirconia Composite Sintered Body]

The pellet-shaped black zirconia composite sintered body (HIP sintered body) samples (approximately 15 mm in diameter × 1.2 mm thickness) of each Example and Comparative Example were directly used to evaluate the shade (n = 3).

The samples were measured for L*, a*, b* against a white background (underlay) (the opposite side of the sample from the measurement device is white) according to L*a*b* color system (JIS Z 8781-4:2013 Color Measurements - Part 4: CIE 1976 L*a*b* color space), using a spectrophotometer CM-3610A (manufactured by Konica Minolta Inc.) in SCI measurement mode with a D65 illuminant, with an area ratio of measurement area to illumination area of 8 mm:11 mm in diameter.

A hiding-power test paper used for measurement involving paints, as specified in JIS K 5600-4-1:1999, was used as the white background (underlay) in the measurement.

The average L*, a*, and b* values for each sample are presented in Tables 1 and 2.

[Strength Evaluation of Black Zirconia Composite Sintered Body]

The pellet-shaped black zirconia composite sintered body (HIP sintered body) samples of each Example and Comparative Example were directly used to measure biaxial flexural strength. The measurement was conducted using a universal testing machine AGS-X (manufactured by Shimadzu Corporation) with the crosshead speed set at 1.0 mm/min, following ISO6872:2015 (n = 5). The measurement results are presented as average values in Tables 1 and 2. A strength of 300 MPa or more was considered acceptable.

[Measurement Method for Average Crystal Grain Size of Sintered Body]

Surface images were captured for the pellet-shaped black zirconia composite sintered body (HIP sintered body) of each Example and Comparative Example, using a scanning electron microscope (VE-9800 manufactured by Keyence under this trade name). The average crystal grain size was calculated by image analysis after indicating grain boundaries on individual crystal grains in the image.

For the measurement of average crystal grain size, the captured SEM image was binarized with image analysis software (Image-Pro Plus manufactured by Hakuto Co., Ltd. under this trade name), and particles were recognized from the field (region) by adjusting the brightness range to provide clear grain boundaries. The crystal grain size from Image-Pro Plus is the average of the measurements of the length of a line segment connecting the contour line and passing through the center of gravity determined from the contour line of the crystal grain, conducted at 2-degree intervals with the center of gravity as the central point. The measurement of crystal grain size was conducted for all particles not extending beyond the edges of the SEM photographic image (3 fields) of each Example and Comparative Example. The average of the measured crystal grain sizes was then determined as the average crystal grain size (number-based) of the sintered body.

Note that particles not extending beyond the edges of the image are particles excluding those with contour lines extending beyond the screen of the SEM photographic image (particles with their contour lines interrupted by the boundary lines at the top, bottom, left, and right). To select the crystal grain size of all particles not extending beyond the edges of the image, the option in Image-Pro Plus was used that excludes all particles lying on the boundary lines.

The average crystal grain size was 2.7 $\mu$m for the crystal grains of the black zirconia composite sintered body of Example 3, and 2.2 $\mu$m for the crystal grains of the black zirconia composite sintered body of Example 8.

[Processability Evaluation of Black Zirconia Composite Sintered Body]

For each Example and Comparative Example, thirty samples of block-shaped black zirconia composite sintered bodies (HIP sintered bodies) were prepared, each with a metal jig attached to a surface approximately 15.7 mm in width and 14.5 mm in height. These samples were then processed into the shape of a typical anterior tooth crown using the CEREC system MC-XL manufactured by Dentsply Sirona. While the present invention is not specifically intended for dental use, the samples were processed into an anterior tooth shape with a dental milling machine in the processability test because this method is suited for assessing the extent of processability of sintered bodies, in terms of both processing time and unit count.

The software inLab® CAM version 20.0.1.203841 was used as a processing program, and the following parameters were selected: Manufacture: IVOCLAR VIVADENT, Material name: IPS e.max CAD, Production Method: Grinding, Block size: C16. For processing tools, Step Bur 12 and Cylinder Pointed Bur 12S were used.

[Processing Time]

The processing times presented in Tables 1 and 2 represent the duration needed to complete the processing of the first sample with a new processing tool, following the conditions outlined in the foregoing section [Processability Evaluation of Black Zirconia Composite Sintered Body]. When it was not possible to process any of the samples within 120 minutes, it was recorded as "Fail".

If errors occurred during processing due to the processing load or some other factor, and the CEREC system MC-XL stopped working during processing, the process was resumed after replacing the tool with a new one. This procedure was repeated until one sample was fully processed, and the time required for this process was recorded as the processing time.

[Unit Count]

The unit count presented in Tables 1 and 2 represents the number of samples that were processed into the shape of an anterior tooth crown without having to replace the processing tool even once during the processing conducted with a new set of processing tools under the conditions outlined in the foregoing section [Processability Evaluation of Black Zirconia Composite Sintered Body]. Testing involved at a maximum of 30 samples. If all thirty samples were successfully processed with a single processing tool, no further tests were conducted, and the result was recorded as "30 or more " in all such instances.

If errors occurred during processing due to the processing load or some other factor, and the MC-XL stopped working before finishing the first sample, the process was resumed after replacing the tool with a new one. This procedure was repeated until one sample was fully processed, and the reciprocal of the number of tools used was recorded as a unit count. For example, "0.2" in Comparative Example 2 in Table 2 indicates that five processing tools were used to process one sample into the shape of an anterior tooth crown. The results are presented in Tables 1 and 2 below.

[Table 1]

| | Raw materials | | | Production conditions | | Black zirconia composite sintered body | | | | | | | | |
| | | | | | | Component content | | | | | | | | |
| | | | | | | Unit [mol%] | | | | | Capping elements or ions [mol%] | TiO$_2$ [mass%] | Al$_2$O$_3$ [mass%] |
| | ZrO$_2$,stabilizer (Y$_2$O$_3$), Nb$_2$O$_5$ or Ta$_2$O$_5$ | Capping agent | Optional component | Highest sintering temperature [°C] | HIP processing temperature ["C] | (1) ZrO$_2$ and HfO$_2$ | (2) Y$_2$O$_3$ (A) | (3) Nb$_2$O$_5$ (B) | (4) Ta$_2$O$_5$ (B) | (1) to (4) in total | | | |
|---|---|---|---|---|---|---|---|---|---|---|---|---|---|
| Ex. 1 | ZrO$_2$, Y$_2$O$_3$, Nb$_2$O$_5$ | NaOH | TiO$_2$ | 1550 | 1450 | 90.30 | 5.30 | 4.40 | 0.00 | 100.00 | 0.18 | 4.00 | 0.00 |
| Ex. 2 | ZrO$_2$, Y$_2$O$_3$, Nb$_2$O$_5$ | NaOH | TiO$_2$ | 1550 | 1450 | 90.30 | 5.30 | 4.40 | 0.00 | 100.00 | 0.18 | 3.50 | 0.00 |
| Ex. 3 | ZrO$_2$, Y$_2$O$_3$, Nb$_2$O$_5$ | NaOH | TiO$_2$ | 1550 | 1450 | 90.30 | 5.30 | 4.40 | 0.00 | 100.00 | 0.18 | 3.00 | 0.00 |
| Ex. 4 | ZrO$_2$, Y$_2$O$_3$, Nb$_2$O$_5$ | NaOH | TiO$_2$ | 1550 | 1450 | 90.30 | 5.30 | 4.40 | 0.00 | 100.00 | 0.18 | 2.75 | 0.00 |
| Ex. 5 | ZrO$_2$, Y$_2$O$_3$, Nb$_2$O$_5$ | NaOH | Absent | 1550 | 1450 | 90.30 | 5.30 | 4.40 | 0.00 | 100.00 | 0.18 | 0.00 | 0.00 |
| Ex. 6 | ZrO$_2$, Y$_2$O$_3$, Nb$_2$O$_5$ | NaOH | TiO$_2$, Al$_2$O$_3$ | 1550 | 1450 | 90.30 | 5.30 | 4.40 | 0.00 | 100.00 | 0.18 | 3.50 | 0.01 |
| Ex. 7 | ZrO$_2$, Y$_2$O$_3$, Nb$_2$O$_5$ | NaOH | TiO$_2$ | 1550 | 1450 | 90.30 | 5.30 | 4.40 | 0.00 | 100.00 | 0.18 | 3.50 | 0.00 |
| Ex. 8 | ZrO$_2$, Y$_2$O$_3$, Nb$_2$O$_5$ | NaOH | TiO$_2$ | 1550 | 1450 | 90.30 | 5.30 | 4.40 | 0.00 | 100.00 | 0.04 | 3.50 | 0.00 |
| Ex. 9 | ZrO$_2$, Y$_2$O$_3$, Nb$_2$O$_5$ | NaOH | TiO$_2$ | 1550 | 1450 | 90.30 | 5.30 | 4.40 | 0.00 | 100.00 | 0.50 | 3.50 | 0.00 |
| Ex. 10 | ZrO$_2$, Y$_2$O$_3$, Nb$_2$O$_5$ | NaOH | TiO$_2$ | 1550 | 1450 | 90.30 | 5.30 | 4.40 | 0.00 | 100.00 | 1.00 | 3.50 | 0.00 |

[Table 1] Continued

| | Raw materials | | | Production conditions | | Black zirconia composite sintered body | | | | | | | | | |
| | ZrO$_2$,stabilizer (Y$_2$O$_3$), Nb$_2$O$_5$ or Ta$_2$O$_5$ | Capping agent | Optional component | Highest sintering temperature [°C] | HIP processing temperature [°C] | Referthermo (carbon is present during sintering) | A/B | Property value | | | | | | | Biaxial flexural strength [MPa] |
| | | | | | | | | Machinability | | Shade | | | | | |
| | | | | | | | | Processing time | Unit count | L* (D65) | a* (D65) | b* (D65) | C* (D65) | | |
| Ex. 1 | ZrO$_2$, Y$_2$O$_3$, Nb$_2$O$_5$ | NaOH | TiO$_2$ | 1550 | 1450 | Absent | 1.2 | 19 m 42 s | 30 or more | 47.6 | -0.1 | -1.4 | 1.4 | | 560 |
| Ex. 2 | ZrO$_2$, Y$_2$O$_3$, Nb$_2$O$_5$ | NaOH | TiO$_2$ | 1550 | 1450 | Absent | 1.2 | 19 m 50 s | 30 or more | 47.8 | -0.2 | -1.4 | 1.4 | | 604 |
| Ex. 3 | ZrO$_2$, Y$_2$O$_3$, Nb$_2$O$_5$ | NaOH | TiO$_2$ | 1550 | 1450 | Absent | 1.2 | 19 m 34 s | 30 or more | 49.0 | -0.2 | -1.5 | 1.5 | | 604 |
| Ex. 4 | ZrO$_2$, Y$_2$O$_3$, Nb$_2$O$_5$ | NaOH | TiO$_2$ | 1550 | 1450 | Absent | 1.2 | 19 m 37 s | 30 or more | 48.9 | -0.2 | -1.3 | 1.3 | | 604 |
| Ex. 5 | ZrO$_2$, Y$_2$O$_3$, Nb$_2$O$_5$ | NaOH | Absent | 1550 | 1450 | Absent | 1.2 | 19 m 20 s | 30 or more | 57.3 | -1.3 | 2.7 | 3.0 | | 298 |
| Ex. 6 | ZrO$_2$, Y$_2$O$_3$, Nb$_2$O$_5$ | NaOH | TiO$_2$, Al$_2$O$_3$ | 1550 | 1450 | Absent | 1.2 | 20 m 14 s | 30 or more | 46.8 | -0.3 | -1.0 | 1.1 | | 585 |
| Ex. 7 | ZrO$_2$, Y$_2$O$_3$, Nb$_2$O$_5$ | NaOH | TiO$_2$ | 1550 | 1450 | Present (in HIP) | 1.2 | 19 m 54 s | 30 or more | 40.1 | 0.2 | 0.2 | 0.3 | | 595 |
| Ex. 8 | ZrO$_2$, Y$_2$O$_3$, Nb$_2$O$_5$ | NaOH | TiO$_2$ | 1550 | 1450 | Absent | 1.2 | 45 m 16 s | 2 | 47.2 | -0.2 | -1.3 | 1.3 | | 620 |
| Ex. 9 | ZrO$_2$, Y$_2$O$_3$, Nb$_2$O$_5$ | NaOH | TiO$_2$ | 1550 | 1450 | Absent | 1.2 | 17 m 50 s | 30 or more | 47.5 | -0.1 | -1.3 | 1.3 | | 553 |
| Ex. 10 | ZrO$_2$, Y$_2$O$_3$, Nb$_2$O$_5$ | NaOH | TiO$_2$ | 1550 | 1450 | Absent | 1.2 | 16 m 13 s | 30 or more | 47.3 | -0.2 | -1.3 | 1.3 | | 489 |

[Table 2]

| | Raw materials | | | Production conditions | | Black zirconia composite sintered body | | | | | | | | |
|---|---|---|---|---|---|---|---|---|---|---|---|---|---|---|
| | | | | | | Component content | | | | | | | | |
| | ZrO₂, stabilizer (Y₂O₃), Nb₂O₅ or Ta₂O₅ | Capping agent | Optional component | Highest sintering temperature [°C] | HIP processing temperature [°C] | Unit [mol%] | | | | | Capping elements or ions [mol%] | TiO₂ [mass%] | Al₂O₃ [mass%] | |
| | | | | | | (1) ZrO₂ and HfO2 | (2) Y₂O₃ (A) | (3) Nb₂O₅ (B) | (4) Ta₂O₅ (B) | (1) to (4) in total | | | | |
| Ex. 11 | ZrO₂, Y₂O₃, Nb₂O₅ | NaOH | TiO2 | 1550 | 1450 | 92.40 | 4.00 | 3.60 | 0.00 | 100.00 | 0.18 | 3.50 | 0.00 | |
| Ex. 12 | ZrO₂, Y₂O₃, Nb₂O₅ | NaOH | TiO2 | 1550 | 1450 | 88.50 | 600 | 5.50 | 0.00 | 100.00 | 0.18 | 3.50 | 0.00 | |
| Ex. 13 | ZrO₂, Y₂O₃, Nb₂O₅ | NaOH | TiO2 | 1550 | 1450 | 86.50 | 700 | 6.50 | 0.00 | 100.00 | 0.18 | 3.50 | 0.00 | |
| Ex. 14 | ZrO₂, Y₂O₃, Nb₂O₅ | LiOH | TiO2 | 1550 | 1450 | 90.70 | 5.20 | 4.10 | 0.00 | 100.00 | 0.15 | 2.80 | 0.00 | |
| Ex. 15 | ZrO₂, Y₂O₃, Nb₂O₅ | KOH | TiO2 | 1550 | 1450 | 90.50 | 5.30 | 4.20 | 0.00 | 100.00 | 0.18 | 2.67 | 0.00 | |
| Ex. 16 | ZrO₂, Y₂O₃, Ta₂O₅ | NaOH | TiO2 | 1550 | 1450 | 90.40 | 5.20 | 0.00 | 4.40 | 100.00 | 0.22 | 2.73 | 0.00 | |
| Ex. 17 | TZ-3Y[*1], TZ-6Y[*1], Nb₂O₅ | NaOH | TiO2 | 1550 | 1450 | 90.40 | 5.20 | 4.40 | 0.00 | 100.00 | 0.21 | 2.73 | 0.00 | |
| Com. Ex. 1 | ZrO₂, Y₂O₃ | Absent | TiO2 | 1500 | 1450 | 96.20 | 3.80 | 0.00 | 0.00 | 100.00 | 0.00 | 8.00 | 0.00 | |
| Com. Ex. 2 | ZrO₂, Y₂O₃, Nb₂O₅ | Absent | TiO2 | 1550 | 1450 | 90.30 | 5.30 | 4.40 | 0.00 | 100.00 | 0.00 | 3.00 | 0.00 | |

EP 4 534 504 A1

| | Raw materials | | | Production conditions | | Black zirconia composite sintered body | | | | | | | | |
|---|---|---|---|---|---|---|---|---|---|---|---|---|---|---|
| | | | | | | Component content | | | | | | | | |
| | ZrO$_2$, stabilizer (Y$_2$O$_3$), Nb$_2$O$_5$ or Ta$_2$O$_5$ | Capping agent | Optional component | Highest sintering temperature [°C] | HIP processing temperature [°C] | Unit [mol%] | | | | | Capping elements or ions [mol%] | TiO$_2$ [mass%] | Al$_2$O$_3$ [mass%] | |
| | | | | | | (1) ZrO$_2$ and HfO2 | (2) Y$_2$O$_3$ (A) | (3) Nb$_2$O$_5$ (B) | (4) Ta$_2$O$_5$ (B) | (1) to (4) in total | | | | |
| Com. Ex. 3 | ZrO$_2$, Y$_2$O$_3$, Nb$_2$O$_5$ | NiO$^{*2}$ | TiO2 | 1550 | 1450 | 90.30 | 5.30 | 4.40 | 0.00 | 100.00 | 0.18$^{*2}$ | 3.00 | 0.00 | |
| Com. Ex. 4 | ZrO$_2$, Y$_2$O$_3$, Nb$_2$O$_5$ | V2O3$^{*2}$ | TiO2 | 1550 | 1450 | 90.30 | 5.30 | 4.40 | 0.00 | 100.00 | 0.18$^{*2}$ | 3.00 | 0.00 | |

[Table 2] Continued

| | Raw materials | | | Production conditions | | Black zirconia composite sintered body | | | | | | | | | |
| | ZrO₂, stabilizer (Y₂O₃), Nb₂O₅ or Ta₂O₅ | Capping agent | Optional component | Highest sintering temperature [°C] | HIP processing temperature [°C] | Referthermo (carbon is present during sintering) | A/B | Property value | | | | | | | |
| | | | | | | | | Machinability | | Shade | | | | | Biaxial flexural strength [MPa] |
| | | | | | | | | Processing time | Unit count | L* (D65) | a* (D65) | b* (D65) | C* (D65) | | |
| Ex. 11 | ZrO₂, Y₂O₃, Nb₂O₅ | NaOH | TiO2 | 1550 | 1450 | Absent | 1.1 | 25 m 20 s | 30 or more | 48.1 | -0.2 | -1.4 | 1.4 | | 576 |
| Ex. 12 | ZrO₂, Y₂O₃, Nb₂O₅ | NaOH | TiO2 | 1550 | 1450 | Absent | 1.1 | 19 m 27 s | 30 or more | 46.4 | -0.3 | -1.4 | 1.4 | | 432 |
| Ex. 13 | ZrO₂, Y₂O₃, Nb₂O₅ | NaOH | TiO2 | 1550 | 1450 | Absent | 1.1 | 19 m 10 s | 30 or more | 46.3 | -0.2 | -1.2 | 1.2 | | 401 |
| Ex. 14 | ZrO₂, Y₂O₃, Nb₂O₅ | LiOH | TiO2 | 1550 | 1450 | Absent | 1.3 | 24 m 45 s | 30 or more | 48.5 | -0.2 | -1.4 | 1.4 | | 595 |
| Ex. 15 | ZrO₂, Y₂O₃, Nb₂O₅ | KOH | TiO2 | 1550 | 1450 | Absent | 1.3 | 24 m 50 s | 30 or more | 48.6 | -0.3 | -1.3 | 1.3 | | 577 |
| Ex. 16 | ZrO₂, Y₂O₃, Ta₂O₅ | NaOH | TiO2 | 1550 | 1450 | Absent | 1.2 | 18m47s | 30 or more | 49.0 | -0.3 | -1.4 | 1.4 | | 542 |
| Ex. 17 | TZ-3Y*¹, TZ-6Y*¹, Nb₂O₅ | NaOH | TiO2 | 1550 | 1450 | Absent | 1.2 | 21 m 25 s | 30 or more | 48.5 | -0.3 | -1.5 | 1.5 | | 571 |
| Com. Ex. 1 | ZrO₂, Y₂O₃ | Absent | TiO2 | 1500 | 1450 | Absent | - | Fail | 0 | 44.2 | -0.2 | -0.8 | 0.9 | | 900 |
| Com. Ex. 2 | ZrO₂, Y₂O₃, Nb₂O₅ | Absent | TiO2 | 1550 | 1450 | Absent | 1.2 | 102 m | 0.2 | 48.5 | -0.2 | -1.3 | 1.3 | | 603 |

23

(continued)

| | Raw materials | | | Production conditions | | Black zirconia composite sintered body | | | | | | | | |
| | | | | | | Referthermo (carbon is present during sintering) | A/B | Property value | | | | | | |
| | | | | | | | | Machinability | | Shade | | | | Biaxial flexural strength [MPa] |
| | $ZrO_2$, stabilizer ($Y_2O_3$), $Nb_2O_5$ or $Ta_2O_5$ | Capping agent | Optional component | Highest sintering temperature [°C] | HIP processing temperature [°C] | | | Processing time | Unit count | L* (D65) | a* (D65) | b* (D65) | C* (D65) | |
| Com. Ex. 3 | $ZrO_2$, $Y_2O_3$, $Nb_2O_5$ | NiO*2 | TiO2 | 1550 | 1450 | Absent | 1.2 | 107 m | 0.2 | 48.2 | -0.2 | -1.1 | 1.1 | 580 |
| Com. Ex. 4 | $ZrO_2$, $Y_2O_3$, $Nb_2O_5$ | V2O3*2 | TiO2 | 1550 | 1450 | Absent | 1.2 | 91 m | 0.2 | 49.1 | -0.1 | 1.0 | 1.0 | 590 |

*1 Yttria solid-solution raw material manufactured by Tosoh Corporation
*2 NiO and $V_2O_3$ in Comparative Examples 3 and 4 do not serve as capping elements but are included in the column for convenience

These results confirmed that the black zirconia composite sintered bodies of the present invention demonstrate excellent machinability even in their sintered form. It was also confirmed that the black zirconia composite sintered bodies of the present invention have adequate strength. In Examples 1 to 17, it was possible to reduce wear on processing tools, increasing the number of units that can be continuously produced with a single processing tool compared to related art.

In contrast, machining was not possible in Comparative Example 1 containing neither $Nb_2O_5$ nor $Ta_2O_5$.

Comparative Example 2, which lacked capping elements or ions, showed inadequate reduction in processing time, and the unit count was considerably low.

Comparative Example 3, which contained a divalent metal element not classified as a capping element, also failed to achieve adequate reduction in processing time.

Sufficient reduction in processing time was also not observed in Comparative Example 4, which contained a trivalent metal element not classified as a capping element.

Patent Literature 4 indicates that increasing the amount of $TiO_2$ leads to a strength reduction proportionate to the amount added (FIG. 7 of Patent Literature 4). However, it was demonstrated from the comparison between Example 4 and Example 5 that $TiO_2$ can act integrally with other components in the black zirconia composite sintered bodies of the present invention when the black zirconia composite sintered bodies contain $Nb_2O_5$ and/or $Ta_2O_5$, and additionally capping elements or ions, leading to improved strength in the black zirconia composite sintered bodies.

INDUSTRIAL APPLICABILITY

A black zirconia composite sintered body of the present invention displays a black color with excellent design qualities while exhibiting superior machinability.

Reference Signs List

1    Zirconia particle
2    Releasing component
3    Adhesive component
4    Grain boundary with no releasing component

**Claims**

1.  A black zirconia composite sintered body comprising $ZrO_2$, $HfO_2$, a stabilizer capable of preventing a phase transformation of zirconia, and $Nb_2O_5$ and/or $Ta_2O_5$,

    wherein the total content of $ZrO_2$ and $HfO_2$ is 78 to 97.5 mol%, the content of the stabilizer is 1 to 12 mol%, and the total content of $Nb_2O_5$ and $Ta_2O_5$ is 1 to 9 mol% in total 100 mol% of $ZrO_2$, $HfO_2$, the stabilizer, $Nb_2O_5$, and $Ta_2O_5$, and
    the black zirconia composite sintered body further comprises elements or ions derived from a capping agent.

2.  The black zirconia composite sintered body according to claim 1, wherein the content of the elements or ions derived from the capping agent is more than 0 mol% and 5 mol% or less relative to total 100 mol% of $ZrO_2$, $HfO_2$, the stabilizer, $Nb_2O_5$, and $Ta_2O_5$.

3.  The black zirconia composite sintered body according to claim 1 or 2, which has a chroma C* of 10 or less as calculated from a* and b* measured against a white background according to L*a*b* color system using a sample measuring 15 mm in diameter and 1.2 mm in thickness.

4.  The black zirconia composite sintered body according to claim 1 or 2, which has $L^* \leq 60$, $|a^*| \leq 3$, and $|b^*| \leq 3$ as measured against a white background according to L*a*b* color system using a sample measuring 15 mm in diameter and 1.2 mm in thickness.

5.  The black zirconia composite sintered body according to any one of claims 1 to 4, wherein the elements or ions derived from the capping agent comprise at least one element or ion thereof selected from the group consisting of Cu, Ag, Li, Na, K, Rb, Cs, Fr, At, I, Br, Cl, and F.

6.  The black zirconia composite sintered body according to any one of claims 1 to 5, which has a ratio A/B of 0.9 or more and 3 or less, where A represents the content of the stabilizer in mol%, and B represents the total content of $Nb_2O_5$ and $Ta_2O_5$ in mol%.

7. The black zirconia composite sintered body according to any one of claims 1 to 6, wherein the stabilizer comprises $Y_2O_3$ and/or $CeO_2$.

8. The black zirconia composite sintered body according to any one of claims 1 to 7, which further comprises a zirconia enhancer, and the content of the zirconia enhancer is more than 0 mass% and 5.0 mass% or less relative to total 100 mass% of $ZrO_2$, $HfO_2$, the stabilizer, $Nb_2O_5$, and $Ta_2O_5$.

9. The black zirconia composite sintered body according to claim 8, wherein the zirconia enhancer comprises $TiO_2$ and/or $Al_2O_3$.

10. The black zirconia composite sintered body according to claim 9, wherein the zirconia enhancer comprises $TiO_2$, and the content of $TiO_2$ is 0.6 to 3.7 mass%.

11. A method for producing a black zirconia composite sintered body of any one of claims 1 to 10, comprising the steps of:

fabricating a molded body with a raw material composition that comprises $ZrO_2$, $HfO_2$, a stabilizer capable of preventing a phase transformation of zirconia, and $Nb_2O_5$ and/or $Ta_2O_5$, wherein the total content of $ZrO_2$ and $HfO_2$ is 78 to 97.5 mol%, the content of the stabilizer is 1 to 12 mol%, and the total content of $Nb_2O_5$ and $Ta_2O_5$ is 1 to 9 mol% in total 100 mol% of $ZrO_2$, $HfO_2$, the stabilizer, $Nb_2O_5$, and $Ta_2O_5$, and that further comprises a capping agent; and
sintering the molded body.

12. The method for producing a black zirconia composite sintered body according to claim 11, which comprises a reduction firing step in the step of sintering the molded body.

13. The method for producing a black zirconia composite sintered body according to claim 11 or 12,

wherein the capping agent contained in the raw material composition is a compound with the potential to become a monovalent ion, and
the method further comprises the step of wet mixing raw materials of the raw material composition in a solvent containing water to obtain the raw material composition.

14. The method for producing a black zirconia composite sintered body according to any one of claims 11 to 13, wherein the stabilizer in the raw material composition comprises a stabilizer not dissolved in $ZrO_2$ and $HfO_2$ as a solid solution.

FIG.1

FIG.2

| | INTERNATIONAL SEARCH REPORT | International application No. |
|---|---|---|
| | | **PCT/JP2023/020507** |

**A. CLASSIFICATION OF SUBJECT MATTER**

*C04B 35/488*(2006.01)i; *A61C 5/70*(2017.01)i; *A61C 13/083*(2006.01)i; *C04B 35/645*(2006.01)i
FI: C04B35/488; A61C5/70; A61C13/083; C04B35/645

According to International Patent Classification (IPC) or to both national classification and IPC

**B. FIELDS SEARCHED**

Minimum documentation searched (classification system followed by classification symbols)

C04B35/488; A61C5/70; A61C13/083; C04B35/645

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2015-127294 A (ACUCELA INC.) 09 July 2015 (2015-07-09)<br>    entire text, all drawings | 1-14 |
| A | JP 2001-354480 A (SUMITOMO METAL INDUSTRIES, LTD.) 25 December 2001<br>(2001-12-25)<br>    entire text, all drawings | 1-14 |
| A | JP 2018-505829 A (BYD CO., LTD.) 01 March 2018 (2018-03-01)<br>    entire text, all drawings | 1-14 |
| A | CN 112500159 A (CHANGYU HOLDINGS GROUP CO., LTD.) 16 March 2021<br>(2021-03-16)<br>    entire text | 1-14 |
| A | JP 2019-508349 A (DENTSPLY SIRONA INC.) 28 March 2019 (2019-03-28)<br>    entire text, all drawings | 1-14 |

☐ Further documents are listed in the continuation of Box C.     ☑ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 July 2023** | **25 July 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/020507**

| Patent document cited in search report | | | Publication date (day/month/year) | Patent family member(s) | | | Publication date (day/month/year) |
|---|---|---|---|---|---|---|---|
| JP | 2015-127294 | A | 09 July 2015 | US entire text, all drawings<br>EP<br>KR | 2015/0183690<br>2889279<br>10-2015-0077356 | A1<br>A1<br>A | |
| JP | 2001-354480 | A | 25 December 2001 | (Family: none) | | | |
| JP | 2018-505829 | A | 01 March 2018 | US entire text, all drawings<br>WO<br>EP<br>CN<br>KR | 2017/0327425<br>2016/091062<br>3231781<br>105565806<br>10-2017-0086096 | A1<br>A1<br>A1<br>A<br>A | |
| CN | 112500159 | A | 16 March 2021 | (Family: none) | | | |
| JP | 2019-508349 | A | 28 March 2019 | US entire text, all drawings<br>WO<br>EP<br>CN | 2017/0183270<br>2017/114777<br>3397194<br>108472110 | A1<br>A1<br>A1<br>A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2001354480 A
- JP 2006342036 A
- JP 2017077976 A
- JP 2015127294 A

### Non-patent literature cited in the description

- Shriver & Atkins Inorganic Chemistry. Foundations, 1. Atomic Structure, vol. 1